# EUROPEAN PATENT APPLICATION

(11) **EP 4 672 003 A1**
(43) Date of publication of application: **31.12.2025**
(21) Application number: 25175579.9
(22) Date of filing: 12.05.2025
(51) Int. Cl.: G06F 12/0886, G06F 12/0804

(54) **UPSTREAM MULTI-DOMAIN ACCESS CONTROL ENCODINGS FOR A DOWNSTREAM SINGLE-DOMAIN ENCRYPTION ENGINE**

(30) Priority: 28.06.2024 US 202418758808
(71) Applicant: INTEL Corporation, Santa Clara, CA 95054 (US)
(72) Inventor: Durham, David M., Beaverton OR, 97007 (US); Dobraunig, Christoph, St. Veit an der Glan (AT)
(74) Representative: Samson & Partner Patentanwälte mbB

(57) **Abstract**

Techniques for masking and access control are described. In some examples, masking and access control circuitry to provide at least per-domain masking, and access control compression, of cache lines to be stored to memory in response to a store instruction and decompression of cache lines loaded from memory for compressible cache lines, wherein a cache line is to be compressed by encoding a pair of matching values in the cache line and storing the encoded pair as a value in the cache line.

## Description

### BACKGROUND

Encryption systems like Total Memory Encryption (TME) and Secure Memory Encryption (SME) provide simple single key memory encryption. However, some systems (such as secure encryption virtualization and trust domains) require multi-key encryption for domain separation.

Unfortunately, multi-key encryption for domain separation can scale poorly, requiring a limited number of key identifiers (KeyIDs) to be passed with every cacheline and a large number of large keys to be stored near the memory controller. A cross-domain access control is not provided.

### BRIEF DESCRIPTION OF DRAWINGS

Various examples in accordance with the present disclosure will be described with reference to the drawings, in which:
FIG. 1 illustrates examples of systems that support masking and access control.
FIG. 2 illustrates examples of a cache line.
FIG. 3 illustrates an example of a modified cache line that has been encoded indicate where pairs of values are the same.
FIG. 4 illustrates examples of a flow for handling a store data request.
FIG. 5 illustrates examples of a flow for handling a load data request.
FIG. 6 illustrates an example computing system.
FIG. 7 illustrates a block diagram of an example processor and/or System on a Chip (SoC) that may have one or more cores and an integrated memory controller.
FIG. 8 is a block diagram illustrating a computing system configured to implement one or more aspects of the examples described herein.
FIG. 9A illustrates examples of a parallel processor.
FIG. 9B illustrates examples of a block diagram of a partition unit.
FIG. 9C illustrates examples of a block diagram of a processing cluster within a parallel processing unit.
FIG. 9D illustrates examples of a graphics multiprocessor in which the graphics multiprocessor couples with the pipeline manager of the processing cluster.
FIGS. 10A-10C illustrate additional graphics multiprocessors, according to examples.
FIG. 11 shows a parallel compute system 1100, according to some examples.
FIGS. 12A-12B illustrate a hybrid logical/physical view of a disaggregated parallel processor, according to examples described herein.
FIG. 13(A) is a block diagram illustrating both an example in-order pipeline and an example register renaming, out-of-order issue/execution pipeline according to examples.
FIG. 13(B) is a block diagram illustrating both an example in-order architecture core and an example register renaming, out-of-order issue/execution architecture core to be included in a processor according to examples.
FIG. 14 illustrates examples of execution unit(s) circuitry, such as execution unit(s) circuitry.
FIG. 15 is a block diagram of a register architecture according to some examples.
FIG. 16 illustrates examples of an instruction format.
FIG. 17 illustrates examples of an addressing information field.
FIGS. 18(A)-(B) illustrate examples of a first prefix.
FIGS. 19(A)-(D) illustrate examples of how the R, X, and B fields of the first prefix are used.
FIGS. 20(A)-(B) illustrate examples of a second prefix.
FIGS. 21(A)-(E) illustrate examples of a third prefix.
FIGS. 22A-22B illustrate thread execution logic including an array of processing elements employed in a graphics processor core according to examples described herein.
FIG. 23 illustrates an additional execution unit, according to an example.
FIG. 24 is a block diagram illustrating a graphics processor instruction format 2400 according to some examples.
FIG. 25 is a block diagram of another example of a graphics processor.
FIG. 26A is a block diagram illustrating a graphics processor command format according to some examples.
FIG. 26B is a block diagram illustrating a graphics processor command sequence according to an example.
FIG. 27 is a block diagram illustrating the use of a software instruction converter to convert binary instructions in a source ISA to binary instructions in a target ISA according to examples.
FIG. 28 is a block diagram illustrating an IP core development system 2800 that may be used to manufacture an integrated circuit to perform operations according to some examples.

### DETAILED DESCRIPTION

The present disclosure relates to methods, apparatus, systems, and non-transitory computer-readable storage media for upstream multi-domain access control encodings for a downstream single-domain encryption engine.

Swapping in additional domains in multi-key environments requires programming a new set of keys in multi-key memory controller engine (such as TME or SME), modifying page tables, and flushing all caches and all translation lookaside buffers (TLBs) that may still hold a previous KeyID mapping. Adding access control via integrity (e.g., multi-keyTME or SME with integrity) steals error correction code (ECC) bits to store a keyed secure hash (e.g., KMAC) which negatively impacts error correction and reducing the robustness the system.

Examples detailed herein use single key memory encryption in a memory controller augmented with a lightweight, low latency access control encoding upstream at the processor pipeline to provide domain separation. This domain separation is provided without the need to pass keyIDs and configure large memory encryption keys in the memory controller which improves performance, security, and scalability.

In some examples, a tweakable wide-block and/or accordion mode, single key encryption downstream engine near the memory controller is utilized where memory encryption latencies are absorbed by the cache hierarchy. Domain separation upstream is provided at the processor core side with lower latency circuit (as compared to an encryption engine). Access control is provided by data encodings where the resulting encoded data is different for each key domain. Meanwhile, incorrectly encoded data or data encoded for another key domain results in detected access control errors and reporting.

In addition to the novel addition of access control across domains, examples detailed herein enable the use of a single key memory encryption engine providing better security and scalability over multi-key TME. This alleviates some scalability concerns as a large number of large keys do not need to be stored in the memory controller, KeyIDs do not need to be propagated through the cache nor stored with every cacheline, and expensive cache flushes and key management are no longer needed. Instead, the currently executing domain is known to the local processor core and directly conveyed to the local masking and access control circuitry detailed herein.

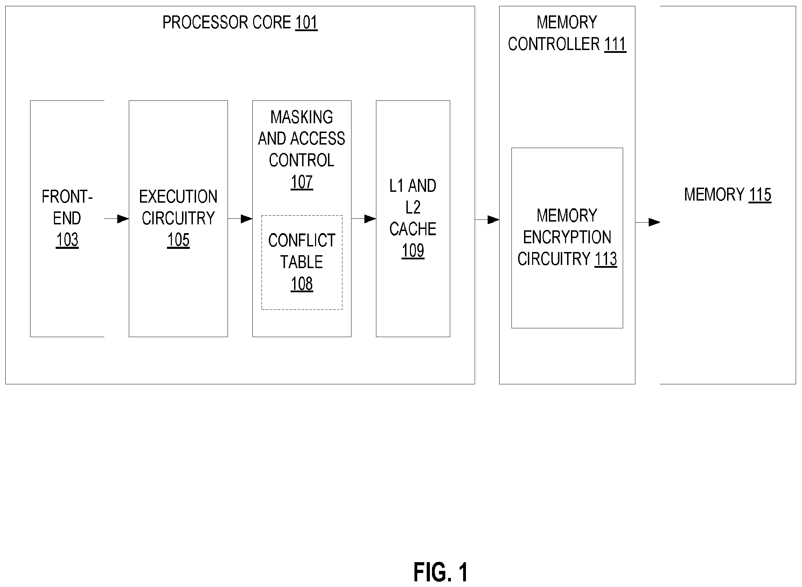

FIG. 1 illustrates examples of systems that support masking and access control. As illustrated, a processor core 101 includes a front-end 103 (examples of front-end components are detailed with respect to at least one other figure), execution circuitry 105 (examples of execution circuitry such as register files, execution units, etc. are detailed with respect to at least one other figure), and one or more levels of cache (cache 109 such as L1, L2, and/or LCC are shown). In this illustration, masking and access control (MAC) logic 107 (e.g., circuitry, firmware, microcode, and/or storage) provides scalable per-domain masking for privacy (and, in some examples, to make data more random), and access control to prevent an adversary from injecting data such as replay from one domain into another to steal data or to construct a code book attack by comparing ciphertexts from one domain to ciphertexts from another domain to determine when the same data was used. Masking may use a lightweight stream cipher such as Ascon, counter mode, onetime pad, or similar method to encrypt the address (e.g. linear or virtual address of the cacheline) and a nonce using a secret key and XORing that key stream with the data. Advantageously the address information may be known to the processor pipeline before the data is fetched allowing cryptographic operations to complete to generate the mask before the data arrives. The MAC logic 107 also includes storage for a conflict table 108 which will be discussed later.

In some examples, outside of the processor core 101 is a memory controller 111 to read and write data from/to memory 115 (e.g., random access memory (RAM) disk, etc.). The memory controller 111 includes memory encryption circuitry 113, in some examples, to provide encryption (e.g., wide block, accordion mode, XTS mode, address tweaked encryption). In some examples, the memory encryption circuitry 113 is external to the memory controller 111.

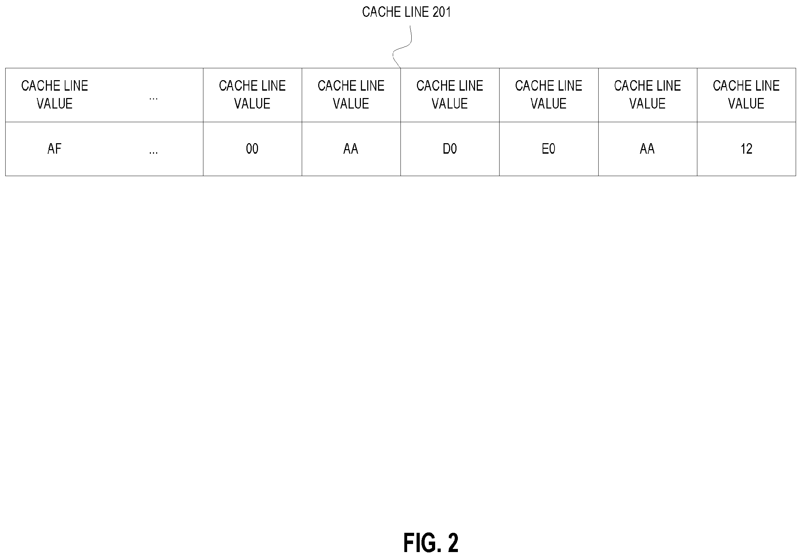

The MAC logic 107 provides access control, in some examples, by encoding cachelines. FIG. 2 illustrates examples of a cache line. In this example, the cache line 201 is broken up into a plurality of values (e.g., a 64-byte cache line with 8 byte values). As shown, a cache line 201 may include values per value (e.g., byte) location that are different (e.g., the least significant byte position has a value of 0x12 and the next least significant byte position has a value of 0xAA) and/or values that are the same in one or more positions (e.g., 0xAA shows up in two positions). These values may correspond to the code or data values of a program.

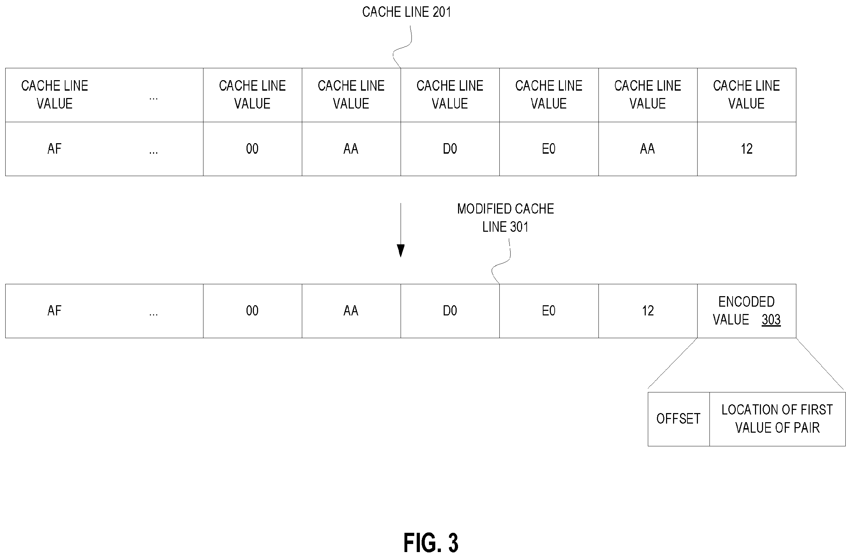

In some examples, the cache line 201 is encoded to indicate where pairs of values are the same, locating and encoding a selected pair. FIG. 3 illustrates an example of a modified cache line 301 that has been encoded indicate where pairs of values are the same. As noted with respect to FIG. 2 the value 0xAA is repeated in the cache line 201 (as is 0x00). 0xAA is picked to be compressed based at least in part on a domain key.

In this illustration, the least significant position is modified to store an encoded value 303 (note that the other values shift positions as one value of the identified pair of values is removed). Which of the available pair values is selected to be encoded and removed from the cache line 201 in the modified cache line 301 depends on the domain key as noted below.

The encoded value 303 includes a location of a first value of the pair of shared values (e.g., locating the 0xAA value) and an offset to the location of the second shared value of the pair of shared values. In this case, the location of the first value of the pair of shared values is location[1] and the location of the second value of the pair of shared values is location[4]. As such, 1 is stored as the location and the "offset" is 3.

In some examples, the encoding scheme uses a 6-bit value i1 to encode the first value of a byte pair and a 2-bit value i2 as the offset to get to the second value (e.g., of up to 4 values). If i1 and i2 point to two bytes with the same value then there is an encodable pair (e.g., a collision). Of course, there can be more than one such collision in a cache line. The number of such collisions is denoted as N. As shown, i1 concatenated with i2 form an 8-bit value. In some examples, to encode a collision the value stored in the location where i2 is pointing is removed. In some examples, to encode a collision, the value stored in the location where i1 is pointing is removed.

In some examples, the cacheline is compressed to a 63-byte value and i1 concatenated with i2 is appended (e.g., to the beginning of the data line). For decoding, the value at position i2 is restored with the value where i1 points to (or vice versa depending on the implementation).

In some examples, simple compression is used instead of or in addition to encoding. For example, if any 16-bit word repeats in a cache line the repeated value may then be turned into a locator, 5 bits for identifying the repeated value location, and 4 bits for the location of the replaced word. The locator may then be moved to the beginning of the line and the contents shifted to fill the gap left by removing the repeated word. This leaves 7 bits for a compression metadata (e.g. to hold a value of the domain key). Similarly, 3 repeated words and one locator provides >20 bits for a compression metadata, and so on. The remaining bits resulting from this compression may then identify the correct KeyID or key hash for a line. KeyID specific masking can be applied to both the compressed and non-compressed data. The probability of a table lookup for a such a scheme is deterministic based on the probability of random masked data matching the compression metadata resulting in a conflict indicator instead (e.g., only 1 in a million chance of a table lookup for a 20-bit compression indicator). As with the encoding scheme, when multiple words have the same value, which word is selected to be the indicated compressed word may likewise be dependent on the domain key or KeyID.

For a randomness test, in some examples, the MAC logic 107 count the number of encodable pairs from the encoding algorithm. If this number N is greater or equal to a threshold T, the data of the cache line is considered as non-random. Otherwise, this data is considered random. The value T must be smaller than or equal to the number of domains. Otherwise, domains have to be co-located on the same encodable position.

In some examples, for a randomness test, all pairs within the cache line that have the same value are counted. If this number is lower than a certain threshold (such as 15), the data is considered to be random. Otherwise, it is considered to be non-random. Using this test should lower the number of entries in the conflict table. However, there may be a need on a write for a second test that clarifies if the data is encodable. If not, it has also to be considered random. By masking the data when below the threshold (data appears too random), the resulting masked data should appear even more random. In this way, masking the data may effectively lower the threshold removing the conflicting ambiguity where the number of pairs is exactly at the threshold T.

In some examples, for corner cases, one specific conflict indicator value (CI) (e.g., a 64-byte value) that requires access to a look-up table.

To handle a store data request, random data or data that cannot be compressed is masked with a key domain specific mask (to make the data more random). Compressible data (e.g., the number of pairs above threshold) is encoded/compressed based on the current domain (e.g., a pair position is selected to be encoded based on the hash of the domain key, making the choice of which pair to compress domain dependent).

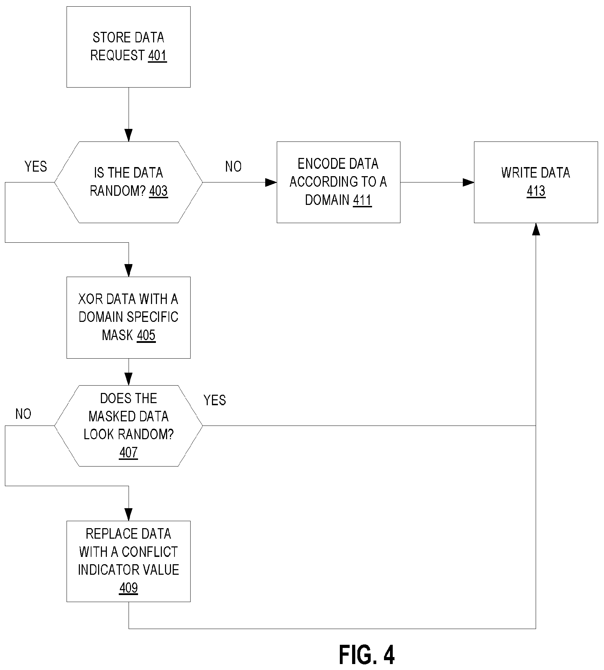

FIG. 4 illustrates examples of a flow for handling a store data request. In some examples, the actions of these flow are performed by the MAC logic 107 and/or memory controller 111. At 401 a store data request is generated by execution circuitry 105 and received by MAC logic 107. A determination of if the data is random is made at 403. For example, is the number of encodable pairs greater than or equal to a threshold? If yes, then the cache line is considered random and the data is masked with a key domain specific mask at 405. In some examples, the masking is performed by using an XOR. In some examples, a different masking technique is used.

A determination of if the masked data looks random is made at 407. The same random test may be used. If yes, then that data can be written. If not, then the data is replaced with a conflict indicator value from the conflict table 108 at 409.

If the data was determined to not be random at 403, then the data is encoded according to a domain at 411. For example, the data is compressible and can be encoded using the pair encoding scheme detailed above.

The encoded data, or masked data that looks random, or the conflict indicator value is written at 413 as illustrated. In some examples, the data to be written is first encrypted by memory encryption circuitry 113. Encoded, masked, or conflict indicator values would produce different ciphertext than the ciphertext output from memory encryption circuitry 113 on "normal" data.

To handle a load data request, random looking data (e.g., insufficient number of pairs, below threshold) is assumed masked such as XORed using domain specific mask to decrypt data. Low entropy data (e.g., sufficient number of pairs) is considered compressed/encoded, a domain specific pair should have been selected from the set of available pairs and replaced with a locator. If the wrong pair was identified by the locator given the current domain, it is a detected access control violation (e.g., machine check exception).

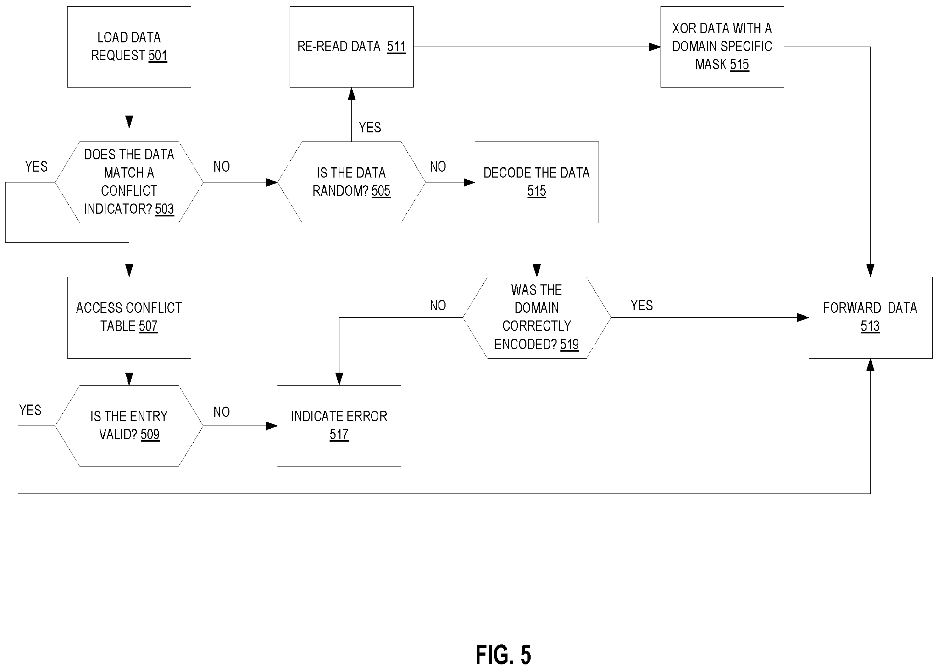

FIG. 5 illustrates examples of a flow for handling a load data request. In some examples, the actions of these flow are performed by the MAC logic 107 and/or memory controller 111.

A load data request is received at 501. A determination is made at 503 if the data that is to be loaded from memory matches a conflict indicator at 503. In the rare case that a mask results in more pairs than the threshold, a conflict indicator may be used as noted above, replacing a portion of the data, to indicate this rare case.

When the to be loaded data does matches a conflict indicator, the conflict table 108 is accessed at 507. The data replaced by the conflict indicator may be restored by looking up its entry from the conflict table 108, along with the domain ID (this is shown as "is the entry valid" 509 - if yes, then then the data can be forwarded to the cache, register, etc. as requested at 513).

If the entry in the conflict table 108 is not valid (or there is not an entry), an error is indicated at 517.

If the data does not match a conflict indicator at 503, a determination of if the data is random is made at 505. Examples of how to make this determination are detailed above. If the data is random, then the data is re-read 511 and masked at 515 (e.g., an XOR with a domain specific mask) and forwarded at 513.

If the data is not random, then the data is decoded at 516 (e.g., the pairs are restored, etc.) A determination of if the domain was correctly encoded is made at 519. For example, was the pair corresponding to the current domain the pair that was selected to be encoded, or did the compression metadata indicate the correct domain? If the current domain (e.g. based on the domain key register) was not correctly encoded, then an error is indicated at 517. If the encoded pair and/or compression metadata corresponds to the current domain, then the data is forwarded at 513.

Note that a per domain high-entropy mask is used to destroy pairs in data that fall below the threshold. This transforms the data into a random sequence of bits with a low probability of having repeated pairs above the threshold.

The advantage over simply masking the data is that it moves from offline attacks to online attacks, where adversaries can be detected, and the compromised machine can be taken down (machine check).

Note that in some examples, the to be loaded data is first decrypted prior to the evaluation(s) of FIG. 5.

In some examples, non-pair data may always be masked. Only pairs need to be preserved when above the threshold. In this case, pair values may be changed based on domain specific substitutions to improve privacy.

The access control is statistical and data dependent. For example, any number of domains can be supported, as the domain key (ID) can be hashed to determine which of a limited number of pair positions to encode. On the other hand, the masking is unlimited. The per domain mask below the threshold intends to destroy pairs (back to random independent and identically distributed (IID) probability, to remove the off-by-one problem), and above the threshold the per domain mask preserves pairs, for example, pairs are not masked, but may be transformed to improve privacy. The masks may be selected that do not have any pairs and tweaked with the address.

In some examples, a domain key may be configured via software into a processor register. For example, a trusted computing-module running in privileged mode may have exclusive access to program this key register for its trust domains. Alternatively, privileged software such as the kernel running in supervisor mode or the virtual machine monitor (VMM) (or hypervisor) running in root virtualization mode may be allowed to set this key register. Software may also select between a set of key registers, for example, to allow software to choose when to use a shared key for communicating across different domains (for example, when accessing a page of memory where a page table entry bit is set to indicate a memory access to the page should use the shared key register). Each processor core or hardware thread may have an active set of key registers using the same or different key values depending on the software currently executing on the core or hardware thread. Notably, as they are local to the core or hardware thread, these key registers may be quickly reprogrammed when switching between key domains without affecting cache state.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

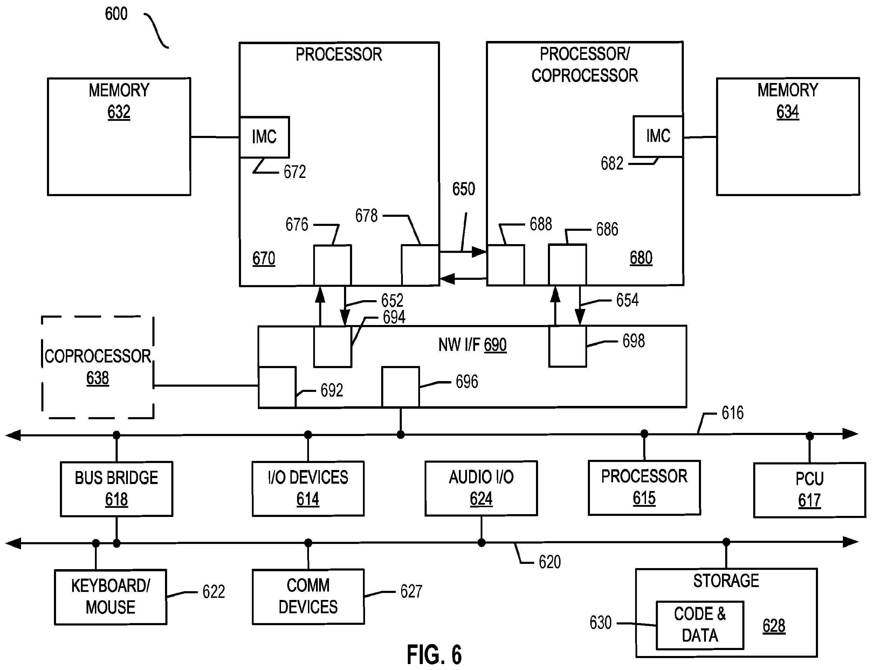

FIG. 6 illustrates an example computing system. Multiprocessor system 600 is an interfaced system and includes a plurality of processors or cores including a first processor 670 and a second processor 680 coupled via an interface 650 such as a point-to-point (P-P) interconnect, a fabric, and/or bus. In some examples, the first processor 670 and the second processor 680 are homogeneous. In some examples, first processor 670 and the second processor 680 are heterogenous. Though the example multiprocessor system 600 is shown to have two processors, the system may have three or more processors, or may be a single processor system. In some examples, the computing system is a system on a chip (SoC).

Processors 670 and 680 are shown including integrated memory controller (IMC) circuitry 672 and 682, respectively. Processor 670 also includes interface circuits 676 and 678; similarly, second processor 680 includes interface circuits 686 and 688. Processors 670, 680 may exchange information via the interface 650 using interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a co-processor 638 via an interface circuit 692. In some examples, the co-processor 638 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 670, 680 or outside of both processors, yet connected with the processors via an interface such as P-P interconnect, such that either or both processors' local cache information may be stored in the shared cache if a processor is placed into a low power mode.

Network interface 690 may be coupled to a first interface 616 via interface circuit 696. In some examples, first interface 616 may be an interface such as a Peripheral Component Interconnect (PCI) interconnect, a PCI Express interconnect or another I/O interconnect. In some examples, first interface 616 is coupled to a power control unit (PCU) 617, which may include circuitry, software, and/or firmware to perform power management operations with regard to the processors 670, 680 and/or co-processor 638. PCU 617 provides control information to a voltage regulator (not shown) to cause the voltage regulator to generate the appropriate regulated voltage. PCU 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other examples, power management operations to be performed by PCU 617 may be implemented externally to a processor, such as by way of a separate power management integrated circuit (PMIC) or another component external to the processor. In yet other examples, power management operations to be performed by PCU 617 may be implemented within BIOS or other system software.

Various I/O devices 614 may be coupled to first interface 616, along with a bus bridge 618 which couples first interface 616 to a second interface 620. In some examples, one or more additional processor(s) 615, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630 and may implement the storage 'ISAB03 in some examples. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

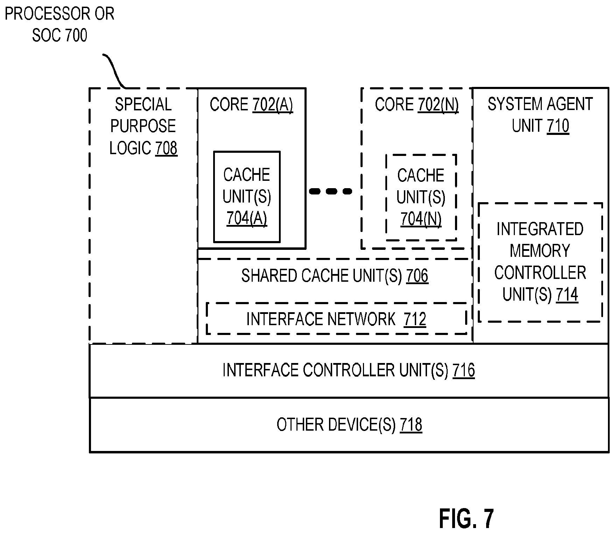

FIG. 7 illustrates a block diagram of an example processor and/or SoC 700 that may have one or more cores and an integrated memory controller. The solid lined boxes illustrate a processor and/or SoC 700 with a single core 702(A), system agent unit circuitry 710, and a set of one or more interface controller unit(s) circuitry 716, while the optional addition of the dashed lined boxes illustrates an alternative processor and/or SoC 700 with multiple cores 702(A)-(N), a set of one or more integrated memory controller unit(s) circuitry 714 in the system agent unit circuitry 710, and special purpose logic 708, as well as a set of one or more interface controller unit(s) circuitry 716. Note that the processor and/or SoC 700 may be one of the processors 670 or 680, or co-processor 638 or 615 of FIG. 6.

Thus, different implementations of the processor and/or SoC 700 may include: 1) a CPU with the special purpose logic 708 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 702(A)-(N) being one or more general purpose cores (e.g., general purpose in-order cores, general purpose out-of-order cores, or a combination of the two); 2) a co-processor with the cores 702(A)-(N) being a large number of special purpose cores intended primarily for graphics and/or scientific (throughput); and 3) a co-processor with the cores 702(A)-(N) being a large number of general purpose in-order cores. Thus, the processor and/or SoC 700 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 704(A)-(N) within the cores 702(A)-(N), a set of one or more shared cache unit(s) circuitry 706, and external memory (not shown) coupled to the set of integrated memory controller unit(s) circuitry 714. The set of one or more shared cache unit(s) circuitry 706 may include one or more mid-level caches, such as level 2 (L2), level 3 (L3), level 4 (L4), or other levels of cache, such as a last level cache (LLC), and/or combinations thereof. While in some examples interface network circuitry 712 (e.g., a ring interconnect) interfaces the special purpose logic 708 (e.g., integrated graphics logic), the set of shared cache unit(s) circuitry 706, and the system agent unit circuitry 710, alternative examples use any number of well-known techniques for interfacing such units. In some examples, coherency is maintained between one or more of the shared cache unit(s) circuitry 706 and cores 702(A)-(N). In some examples, interface controller unit(s) circuitry 716 couple the cores 702(A)-(N) to one or more other devices 718 such as one or more I/O devices, storage, one or more communication devices (e.g., wireless networking, wired networking, etc.), etc.

In some examples, one or more of the cores 702(A)-(N) are capable of multi-threading. The system agent unit circuitry 710 includes those components coordinating and operating cores 702(A)-(N). The system agent unit circuitry 710 may include, for example, power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous in terms of instruction set architecture (ISA). Alternatively, the cores 702(A)-(N) may be heterogeneous in terms of ISA; that is, a subset of the cores 702(A)-(N) may be capable of executing an ISA, while other cores may be capable of executing only a subset of that ISA or another ISA.

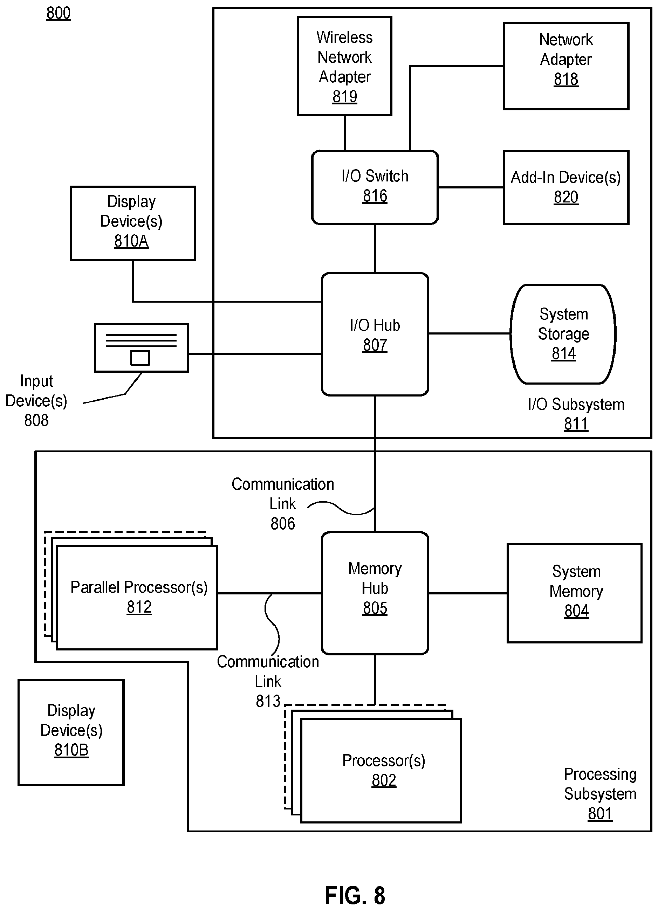

FIG. 8 is a block diagram illustrating a computing system 800 configured to implement one or more aspects of the examples described herein. The computing system 800 includes a processing subsystem 801 having one or more processor(s) 802 and a system memory 804 communicating via an interconnection path that may include a memory hub 805. The memory hub 805 may be a separate component within a chipset component or may be integrated within the one or more processor(s) 802. The memory hub 805 couples with an I/O subsystem 811 via a communication link 806. The I/O subsystem 811 includes an I/O hub 807 that can enable the computing system 800 to receive input from one or more input device(s) 808. Additionally, the I/O hub 807 can enable a display controller, which may be included in the one or more processor(s) 802, to provide outputs to one or more display device(s) 810A. In some examples the one or more display device(s) 810A coupled with the I/O hub 807 can include a local, internal, or embedded display device.

The processing subsystem 801, for example, includes one or more parallel processor(s) 812 coupled to memory hub 805 via a bus or communication link 813. The communication link 813 may be one of any number of standards-based communication link technologies or protocols, such as, but not limited to PCI Express, or may be a vendor specific communications interface or communications fabric. The one or more parallel processor(s) 812 may form a computationally focused parallel or vector processing system that can include a large number of processing cores and/or processing clusters, such as a many integrated core (MIC) processor. For example, the one or more parallel processor(s) 812 form a graphics processing subsystem that can output pixels to one of the one or more display device(s) 810A coupled via the I/O hub 807. The one or more parallel processor(s) 812 can also include a display controller and display interface (not shown) to enable a direct connection to one or more display device(s) 810B.

Within the I/O subsystem 811, a system storage unit 814 can connect to the I/O hub 807 to provide a storage mechanism for the computing system 800. An I/O switch 816 can be used to provide an interface mechanism to enable connections between the I/O hub 807 and other components, such as a network adapter 818 and/or wireless network adapter 819 that may be integrated into the platform, and various other devices that can be added via one or more add-in device(s) 820. The add-in device(s) 820 may also include, for example, one or more external graphics processor devices, graphics cards, and/or compute accelerators. The network adapter 818 can be an Ethernet adapter or another wired network adapter. The wireless network adapter 819 can include one or more of a Wi-Fi, Bluetooth, near field communication (NFC), or other network device that includes one or more wireless radios.

The computing system 800 can include other components not explicitly shown, including USB or other port connections, optical storage drives, video capture devices, and the like, which may also be connected to the I/O hub 807. Communication paths interconnecting the various components in FIG. 8 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 812 may incorporate circuitry optimized for graphics and video processing, including, for example, video output circuitry, and constitutes a graphics processing unit (GPU). Alternatively or additionally, the one or more parallel processor(s) 812 can incorporate circuitry optimized for general purpose processing, while preserving the underlying computational architecture, described in greater detail herein. Components of the computing system 800 may be integrated with one or more other system elements on a single integrated circuit. For example, the one or more parallel processor(s) 812, memory hub 805, processor(s) 802, and I/O hub 807 can be integrated into a system on chip (SoC) integrated circuit. Alternatively, the components of the computing system 800 can be integrated into a single package to form a system in package (SIP) configuration. In some examples at least a portion of the components of the computing system 800 can be integrated into a multi-chip module (MCM), which can be interconnected with other multi-chip modules into a modular computing system.

It will be appreciated that the computing system 800 shown herein is illustrative and that variations and modifications are possible. The connection topology, including the number and arrangement of bridges, the number of processor(s) 802, and the number of parallel processor(s) 812, may be modified as desired. For instance, system memory 804 can be connected to the processor(s) 802 directly rather than through a bridge, while other devices communicate with system memory 804 via the memory hub 805 and the processor(s) 802. In other alternative topologies, the parallel processor(s) 812 are connected to the I/O hub 807 or directly to one of the one or more processor(s) 802, rather than to the memory hub 805. In other examples, the I/O hub 807 and memory hub 805 may be integrated into a single chip. It is also possible that two or more sets of processor(s) 802 are attached via multiple sockets, which can couple with two or more instances of the parallel processor(s) 812.

Some of the particular components shown herein are optional and may not be included in all implementations of the computing system 800. For example, any number of add-in cards or peripherals may be supported, or some components may be eliminated. Furthermore, some architectures may use different terminology for components similar to those illustrated in FIG. 8. For example, the memory hub 805 may be referred to as a Northbridge in some architectures, while the I/O hub 807 may be referred to as a Southbridge.

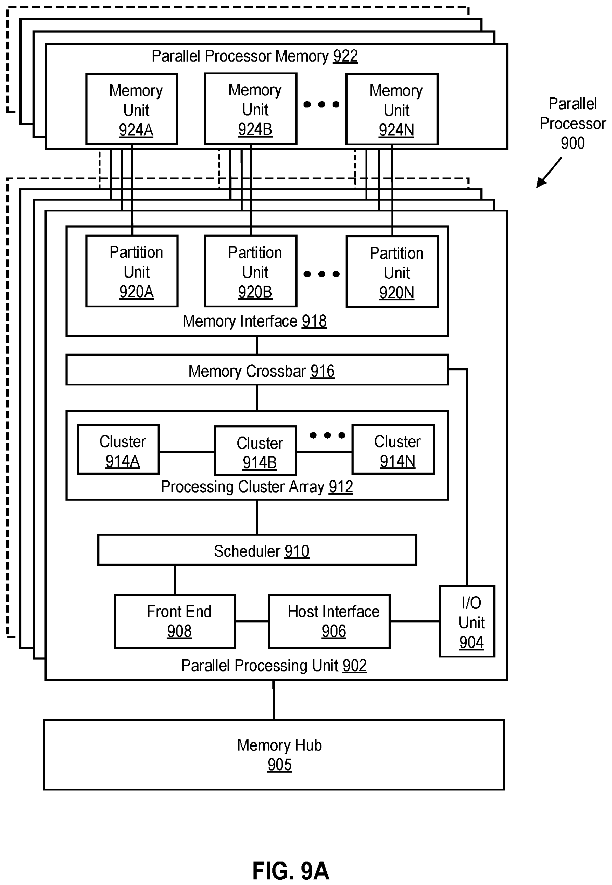

FIG. 9A illustrates examples of a parallel processor900. The parallel processor 900 may be a GPU, GPGPU or the like as described herein. The various components of the parallel processor 900 may be implemented using one or more integrated circuit devices, such as programmable processors, application specific integrated circuits (ASICs), or field programmable gate arrays (FPGA). The parallel processor 900 may be one or more of the parallel processor(s) 812 shown in FIG. 8.

The parallel processor 900 includes a parallel processing unit 902. The parallel processing unit includes an I/O unit 904 that enables communication with other devices, including other instances of the parallel processing unit 902. The I/O unit 904 may be directly connected to other devices. For instance, the I/O unit 904 connects with other devices via the use of a hub or switch interface, such as memory hub 805. The connections between the memory hub 805 and the I/O unit 904 form a communication link 813. Within the parallel processing unit 902, the I/O unit 904 connects with a host interface 906 and a memory crossbar 916, where the host interface 906 receives commands directed to performing processing operations and the memory crossbar 916 receives commands directed to performing memory operations.

When the host interface 906 receives a command buffer via the I/O unit 904, the host interface 906 can direct work operations to perform those commands to a front end 908. In some examples the front end 908 couples with a scheduler 910, which is configured to distribute commands or other work items to a processing cluster array 912. The scheduler 910 ensures that the processing cluster array 912 is properly configured and in a valid state before tasks are distributed to the processing clusters of the processing cluster array 912. The scheduler 910 may be implemented via firmware logic executing on a microcontroller. The microcontroller implemented scheduler 910 is configurable to perform complex scheduling and work distribution operations at coarse and fine granularity, enabling rapid preemption and context switching of threads executing on the processing cluster array 912. Preferably, the host software can prove workloads for scheduling on the processing cluster array 912 via one of multiple graphics processing doorbells. In other examples, polling for new workloads or interrupts can be used to identify or indicate availability of work to perform. The workloads can then be automatically distributed across the processing cluster array 912 by the scheduler 910 logic within the scheduler microcontroller.

The processing cluster array 912 can include up to "N" processing clusters (e.g., cluster 914A, cluster 914B, through cluster 914N). Each cluster 914A-914N of the processing cluster array 912 can execute a large number of concurrent threads. The scheduler 910 can allocate work to the clusters 914A-914N of the processing cluster array 912 using various scheduling and/or work distribution algorithms, which may vary depending on the workload arising for each type of program or computation. The scheduling can be handled dynamically by the scheduler 910 or can be assisted in part by compiler logic during compilation of program logic configured for execution by the processing cluster array 912. Optionally, different clusters 914A-914N of the processing cluster array 912 can be allocated for processing different types of programs or for performing different types of computations.

The processing cluster array 912 can be configured to perform various types of parallel processing operations. For example, the processing cluster array 912 is configured to perform general-purpose parallel compute operations. For example, the processing cluster array 912 can include logic to execute processing tasks including filtering of video and/or audio data, performing modeling operations, including physics operations, and performing data transformations.

The processing cluster array 912 is configured to perform parallel graphics processing operations. In such examples in which the parallel processor 900 is configured to perform graphics processing operations, the processing cluster array 912 can include additional logic to support the execution of such graphics processing operations, including, but not limited to texture sampling logic to perform texture operations, as well as tessellation logic and other vertex processing logic. Additionally, the processing cluster array 912 can be configured to execute graphics processing related shader programs such as, but not limited to vertex shaders, tessellation shaders, geometry shaders, and pixel shaders. The parallel processing unit 902 can transfer data from system memory via the I/O unit 904 for processing. During processing the transferred data can be stored to on-chip memory (e.g., parallel processor memory 922) during processing, then written back to system memory.

In examples in which the parallel processing unit 902 is used to perform graphics processing, the scheduler 910 may be configured to divide the processing workload into approximately equal sized tasks, to better enable distribution of the graphics processing operations to multiple clusters 914A-914N of the processing cluster array 912. In some of these examples, portions of the processing cluster array 912 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 914A-914N may be stored in buffers to allow the intermediate data to be transmitted between clusters 914A-914N for further processing.

During operation, the processing cluster array 912 can receive processing tasks to be executed via the scheduler 910, which receives commands defining processing tasks from front end 908. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 910 may be configured to fetch the indices corresponding to the tasks or may receive the indices from the front end 908. The front end 908 can be configured to ensure the processing cluster array 912 is configured to a valid state before the workload specified by incoming command buffers (e.g., batch-buffers, push buffers, etc.) is initiated.

Each of the one or more instances of the parallel processing unit 902 can couple with parallel processor memory 922. The parallel processor memory 922 can be accessed via the memory crossbar 916, which can receive memory requests from the processing cluster array 912 as well as the I/O unit 904. The memory crossbar 916 can access the parallel processor memory 922 via a memory interface 918. The memory interface 918 can include multiple partition units (e.g., partition unit 920A, partition unit 920B, through partition unit 920N) that can each couple to a portion (e.g., memory unit) of parallel processor memory 922. The number of partition units 920A-920N may be configured to be equal to the number of memory units, such that a first partition unit 920A has a corresponding first memory unit 924A, a second partition unit 920B has a corresponding second memory unit 924B, and an Nth partition unit 920N has a corresponding Nth memory unit 924N. In other examples, the number of partition units 920A-920N may not be equal to the number of memory devices.

The memory units 924A-924N can include various types of memory devices, including dynamic random-access memory (DRAM) or graphics random access memory, such as synchronous graphics random access memory (SGRAM), including graphics double data rate (GDDR) memory. Optionally, the memory units 924A-924N may also include 3D stacked memory, including but not limited to high bandwidth memory (HBM). Persons skilled in the art will appreciate that the specific implementation of the memory units 924A-924N can vary and can be selected from one of various conventional designs. Render targets, such as frame buffers or texture maps may be stored across the memory units 924A-924N, allowing partition units 920A-920N to write portions of each render target in parallel to efficiently use the available bandwidth of parallel processor memory 922. In some examples, a local instance of the parallel processor memory 922 may be excluded in favor of a unified memory design that utilizes system memory in conjunction with local cache memory.

Optionally, any one of the clusters 914A-914N of the processing cluster array 912 has the ability to process data that will be written to any of the memory units 924A-924N within parallel processor memory 922. The memory crossbar 916 can be configured to transfer the output of each cluster 914A-914N to any partition unit 920A-920N or to another cluster 914A-914N, which can perform additional processing operations on the output. Each cluster 914A-914N can communicate with the memory interface 918 through the memory crossbar 916 to read from or write to various external memory devices. In one of the examples with the memory crossbar 916 the memory crossbar 916 has a connection to the memory interface 918 to communicate with the I/O unit 904, as well as a connection to a local instance of the parallel processor memory 922, enabling the processing units within the different processing clusters 914A-914N to communicate with system memory or other memory that is not local to the parallel processing unit 902. Generally, the memory crossbar 916 may, for example, be able to use virtual channels to separate traffic streams between the clusters 914A-914N and the partition units 920A-920N.

While a single instance of the parallel processing unit 902 is illustrated within the parallel processor 900, any number of instances of the parallel processing unit 902 can be included. For example, multiple instances of the parallel processing unit 902 can be provided on a single add-in card, or multiple add-in cards can be interconnected. For example, the parallel processor 900 can be an add-in device, such as add-in device(s) 820 of FIG. 8, which may be a graphics card such as a discrete graphics card that includes one or more GPUs, one or more memory devices, and device-to-device or network or fabric interfaces. The different instances of the parallel processing unit 902 can be configured to inter-operate even if the different instances have different numbers of processing cores, different amounts of local parallel processor memory, and/or other configuration differences. Optionally, some instances of the parallel processing unit 902 can include higher precision floating point units relative to other instances. Systems incorporating one or more instances of the parallel processing unit 902 or the parallel processor 900 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 902 can be partitioned into multiple instances. Those multiple instances can be configured to execute workloads associated with different clients in an isolated manner, enabling a pre-determined quality of service to be provided for each client. For example, each cluster 914A-914N can be compartmentalized and isolated from other clusters, allowing the processing cluster array 912 to be divided into multiple compute partitions or instances. In such configuration, workloads that execute on an isolated partition are protected from faults or errors associated with a different workload that executes on a different partition. The partition units 920A-920N can be configured to enable a dedicated and/or isolated path to memory for the clusters 914A-914N associated with the respective compute partitions. This datapath isolation enables the compute resources within a partition can communicate with one or more assigned memory units 924A-924N without being subjected to inference by the activities of other partitions.

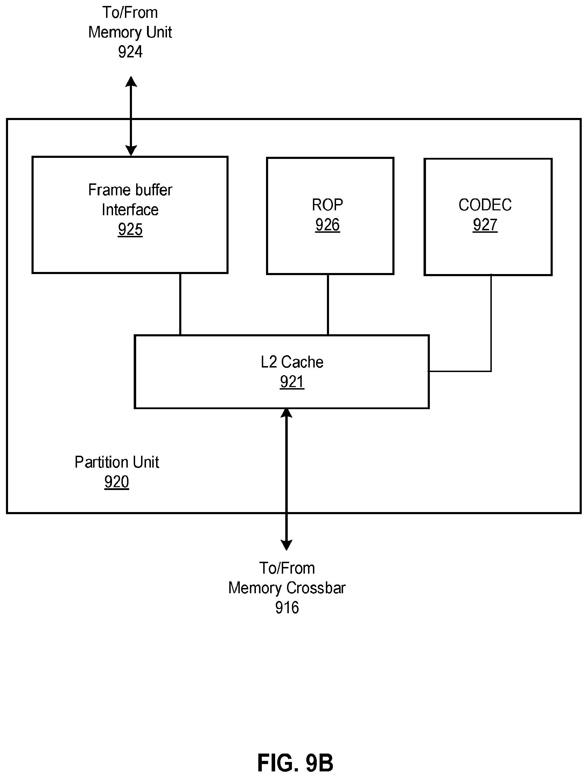

FIG. 9B is a block diagram of a partition unit 920. The partition unit 920 may be an instance of one of the partition units 920A-920N of FIG. 9A. As illustrated, the partition unit 920 includes an L2 cache 921, a frame buffer interface 925, and a ROP 926 (raster operations unit). The L2 cache 921 is a read/write cache that is configured to perform load and store operations received from the memory crossbar 916 and ROP 926. Read misses and urgent write-back requests are output by L2 cache 921 to frame buffer interface 925 for processing. Updates can also be sent to the frame buffer via the frame buffer interface 925 for processing. In some examples the frame buffer interface 925 interfaces with one of the memory units in parallel processor memory, such as the memory units 924A-924N of FIG. 9A (e.g., within parallel processor memory 922). The partition unit 920 may additionally or alternatively also interface with one of the memory units in parallel processor memory via a memory controller (not shown).

In graphics applications, the ROP 926 is a processing unit that performs raster operations such as stencil, z test, blending, and the like. The ROP 926 then outputs processed graphics data that is stored in graphics memory. In some examples the ROP 926 includes or couples with a CODEC 927 that includes compression logic to compress depth or color data that is written to memory or the L2 cache 921 and decompress depth or color data that is read from memory or the L2 cache 921. The compression logic can be lossless compression logic that makes use of one or more of multiple compression algorithms. The type of compression that is performed by the CODEC 927 can vary based on the statistical characteristics of the data to be compressed. For example, in some examples, delta color compression is performed on depth and color data on a per-tile basis. In some examples the CODEC 927 includes compression and decompression logic that can compress and decompress compute data associated with machine learning operations. The CODEC 927 can, for example, compress sparse matrix data for sparse machine learning operations. The CODEC 927 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 926 may be included within each processing cluster (e.g., cluster 914A-914N of FIG. 9A) instead of within the partition unit 920. In such example, read and write requests for pixel data are transmitted over the memory crossbar 916 instead of pixel fragment data. The processed graphics data may be displayed on a display device, such as one of the one or more display device(s) 810A-810B of FIG. 8, routed for further processing by the processor(s) 802, or routed for further processing by one of the processing entities within the parallel processor 900 of FIG. 9A.

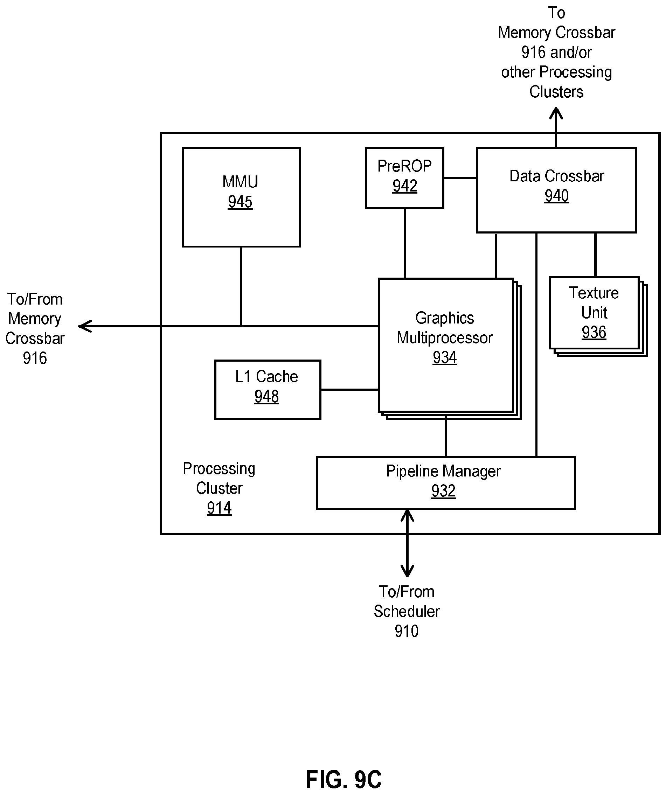

FIG. 9C is a block diagram of a processing cluster 914 within a parallel processing unit. For example, the processing cluster is an instance of one of the processing clusters 914A-914N of FIG. 9A. The processing cluster 914 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 914 can be controlled via a pipeline manager 932 that distributes processing tasks to SIMT parallel processors. The pipeline manager 932 receives instructions from the scheduler 910 of FIG. 9A and manages execution of those instructions via a graphics multiprocessor 934 and/or a texture unit 936. The graphics multiprocessor 934 is an exemplary instance of a SIMT parallel processor. However, various types of SIMT parallel processors of differing architectures may be included within the processing cluster 914. One or more instances of the graphics multiprocessor 934 can be included within a processing cluster 914. The graphics multiprocessor 934 can process data and a data crossbar 940 can be used to distribute the processed data to one of multiple possible destinations, including other shader units. The pipeline manager 932can facilitate the distribution of processed data by specifying destinations for processed data to be distributed via the data crossbar 940.

Each graphics multiprocessor 934 within the processing cluster 914 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 914 constitute a thread. A set of threads executing across the set of parallel processing engines is a thread group. A thread group executes the same program on different input data. Each thread within a thread group can be assigned to a different processing engine within a graphics multiprocessor 934. A thread group may include fewer threads than the number of processing engines within the graphics multiprocessor 934. When a thread group includes fewer threads than the number of processing engines, one or more of the processing engines may be idle during cycles in which that thread group is being processed. A thread group may also include more threads than the number of processing engines within the graphics multiprocessor 934. When the thread group includes more threads than the number of processing engines within the graphics multiprocessor 934, processing can be performed over consecutive clock cycles. Optionally, multiple thread groups can be executed concurrently on the graphics multiprocessor 934.

The graphics multiprocessor 934 may include an internal cache memory to perform load and store operations. Optionally, the graphics multiprocessor 934 can forego an internal cache and use a cache memory (e.g., level 1 (L1) cache 948) within the processing cluster 914. Each graphics multiprocessor 934 also has access to level 2 (L2) caches within the partition units (e.g., partition units 920A-920N of FIG. 9A) that are shared among all processing clusters 914 and may be used to transfer data between threads. The graphics multiprocessor 934 may also access off-chip global memory, which can include one or more of local parallel processor memory and/or system memory. Any memory external to the parallel processing unit 902 may be used as global memory. Embodiments in which the processing cluster 914 includes multiple instances of the graphics multiprocessor 934 can share common instructions and data, which may be stored in the L1 cache 948.

Each processing cluster 914 may include an MMU 945 (memory management unit) that is configured to map virtual addresses into physical addresses. In other examples, one or more instances of the MMU 945 may reside within the memory interface 918 of FIG. 9A. The MMU 945 includes a set of page table entries (PTEs) used to map a virtual address to a physical address of a tile and optionally a cache line index. The MMU 945 may include address translation lookaside buffers (TLB) or caches that may reside within the graphics multiprocessor 934 or the L1 cache 948 of processing cluster 914. The physical address is processed to distribute surface data access locality to allow efficient request interleaving among partition units. The cache line index may be used to determine whether a request for a cache line is a hit or miss.

In graphics and computing applications, a processing cluster 914 may be configured such that each graphics multiprocessor 934 is coupled to a texture unit 936 for performing texture mapping operations, e.g., determining texture sample positions, reading texture data, and filtering the texture data. Texture data is read from an internal texture L1 cache (not shown) or in some examples from the L1 cache within graphics multiprocessor 934 and is fetched from an L2 cache, local parallel processor memory, or system memory, as needed. Each graphics multiprocessor 934 outputs processed tasks to the data crossbar 940 to provide the processed task to another processing cluster 914 for further processing or to store the processed task in an L2 cache, local parallel processor memory, or system memory via the memory crossbar 916. A preROP 942 (pre-raster operations unit) is configured to receive data from graphics multiprocessor 934, direct data to ROP units, which may be located with partition units as described herein (e.g., partition units 920A-920N of FIG. 9A). The preROP 942 unit can perform optimizations for color blending, organize pixel color data, and perform address translations.

It will be appreciated that the core architecture described herein is illustrative and that variations and modifications are possible. Any number of processing units, e.g., graphics multiprocessor 934, texture units 936, preROPs 942, etc., may be included within a processing cluster 914. Further, while only one processing cluster 914 is shown, a parallel processing unit as described herein may include any number of instances of the processing cluster 914. Optionally, each processing cluster 914 can be configured to operate independently of other processing clusters 914 using separate and distinct processing units, L1 caches, L2 caches, etc.

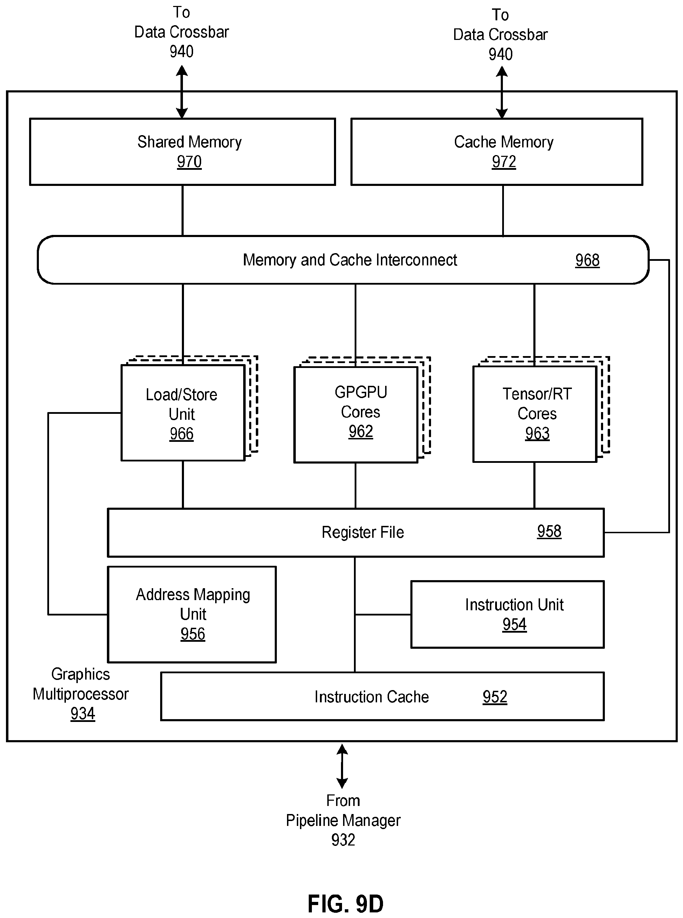

FIG. 9D shows an example of the graphics multiprocessor 934 in which the graphics multiprocessor 934 couples with the pipeline manager 932 of the processing cluster 914. The graphics multiprocessor 934 has an execution pipeline including but not limited to an instruction cache 952, an instruction unit 954, an address mapping unit 956, a register file 958, one or more general purpose graphics processing unit (GPGPU) cores 962, and one or more load/store units 966. The GPGPU cores 962 and load/store units 966 are coupled with cache memory 972 and shared memory 970 via a memory and cache interconnect 968. The graphics multiprocessor 934 may additionally include tensor and/or ray-tracing cores 963 that include hardware logic to accelerate matrix and/or ray-tracing operations.

The instruction cache 952 may receive a stream of instructions to execute from the pipeline manager 932. The instructions are cached in the instruction cache 952 and dispatched for execution by the instruction unit 954. The instruction unit 954 can dispatch instructions as thread groups (e.g., warps), with each thread of the thread group assigned to a different execution unit within GPGPU core 962. An instruction can access any of a local, shared, or global address space by specifying an address within a unified address space. The address mapping unit 956 can be used to translate addresses in the unified address space into a distinct memory address that can be accessed by the load/store units 966.

The register file 958 provides a set of registers for the functional units of the graphics multiprocessor 934. The register file 958 provides temporary storage for operands connected to the data paths of the functional units (e.g., GPGPU cores 962, load/store units 966) of the graphics multiprocessor 934. The register file 958 may be divided between each of the functional units such that each functional unit is allocated a dedicated portion of the register file 958. For example, the register file 958 may be divided between the different warps being executed by the graphics multiprocessor 934.

The GPGPU cores 962 can each include floating point units (FPUs) and/or integer arithmetic logic units (ALUs) that are used to execute instructions of the graphics multiprocessor934. In some implementations, the GPGPU cores 962 can include hardware logic that may otherwise reside within the tensor and/or ray-tracing cores 963. The GPGPU cores 962 can be similar in architecture or can differ in architecture. For example and in some examples, a first portion of the GPGPU cores 962 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 934 can additionally include one or more fixed function or special function units to perform specific functions such as copy rectangle or pixel blending operations. One or more of the GPGPU cores can also include fixed or special function logic.

The GPGPU cores 962 may include SIMD logic capable of performing a single instruction on multiple sets of data. Optionally, GPGPU cores 962 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 968 is an interconnect network that connects each of the functional units of the graphics multiprocessor 934 to the register file 958 and to the shared memory 970. For example, the memory and cache interconnect 968 is a crossbar interconnect that allows the load/store unit 966 to implement load and store operations between the shared memory 970 and the register file 958. The register file 958 can operate at the same frequency as the GPGPU cores 962, thus data transfer between the GPGPU cores 962 and the register file 958 is very low latency. The shared memory 970 can be used to enable communication between threads that execute on the functional units within the graphics multiprocessor 934. The cache memory 972 can be used as a data cache for example, to cache texture data communicated between the functional units and the texture unit 936. The shared memory 970 can also be used as a program managed cached. The shared memory 970 and the cache memory 972 can couple with the data crossbar 940 to enable communication with other components of the processing cluster. Threads executing on the GPGPU cores 962 can programmatically store data within the shared memory in addition to the automatically cached data that is stored within the cache memory 972.

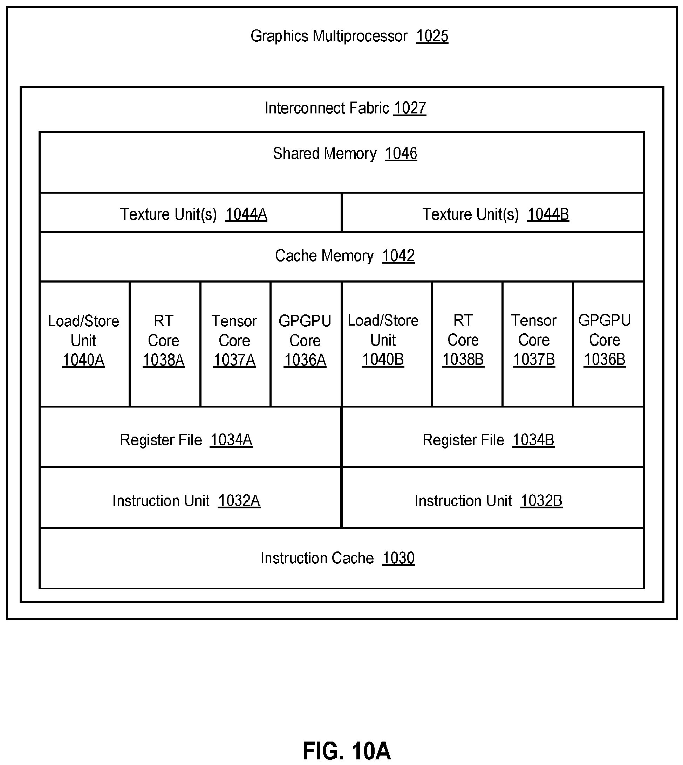

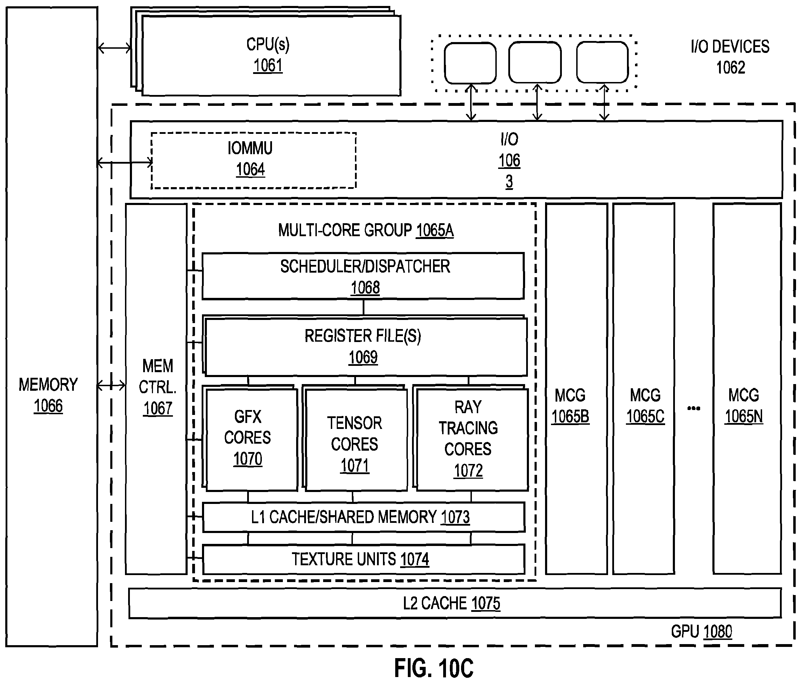

FIGS. 10A-10C illustrate additional graphics multiprocessors, according to examples. FIG. 10A-10B illustrate graphics multiprocessors 1025, 1050, which are related to the graphics multiprocessor 934 of FIG. 9C and may be used in place of one of those. Therefore, the disclosure of any features in combination with the graphics multiprocessor 934 herein also discloses a corresponding combination with the graphics multiprocessors 1025, 1050, but is not limited to such. FIG. 10C illustrates a graphics processing unit (GPU) 1080 which includes dedicated sets of graphics processing resources arranged into multi-core groups 1065A-1065N, which correspond to the graphics multiprocessors 1025, 1050. The illustrated graphics multiprocessors 1025, 1050 and the multi-core groups 1065A-1065N can be streaming multiprocessors (SM) capable of simultaneous execution of a large number of execution threads.

The graphics multiprocessor 1025 of FIG. 10A includes multiple additional instances of execution resource units relative to the graphics multiprocessor 934 of FIG. 9D. For example, the graphics multiprocessor 1025 can include multiple instances of the instruction unit 1032A-1032B, register file 1034A-1034B, and texture unit(s) 1044A-1044B. The graphics multiprocessor 1025 also includes multiple sets of graphics or compute execution units (e.g., GPGPU core 1036A-1036B,tensor core 1037A-1037B, ray-tracing core 1038A-1038B) and multiple sets of load/store units 1040A-1040B. The execution resource units have a common instruction cache 1030, texture and/or data cache memory 1042, and shared memory 1046.

The various components can communicate via an interconnect fabric 1027. The interconnect fabric 1027 may include one or more crossbar switches to enable communication between the various components of the graphics multiprocessor 1025. The interconnect fabric 1027 may be a separate, high-speed network fabric layer upon which each component of the graphics multiprocessor 1025 is stacked. The components of the graphics multiprocessor 1025 communicate with remote components via the interconnect fabric 1027. For example, the cores 1036A-1036B, 1037A-1037B, and 1038A-1038B can each communicate with shared memory 1046 via the interconnect fabric 1027. The interconnect fabric 1027 can arbitrate communication within the graphics multiprocessor 1025 to ensure a fair bandwidth allocation between components.

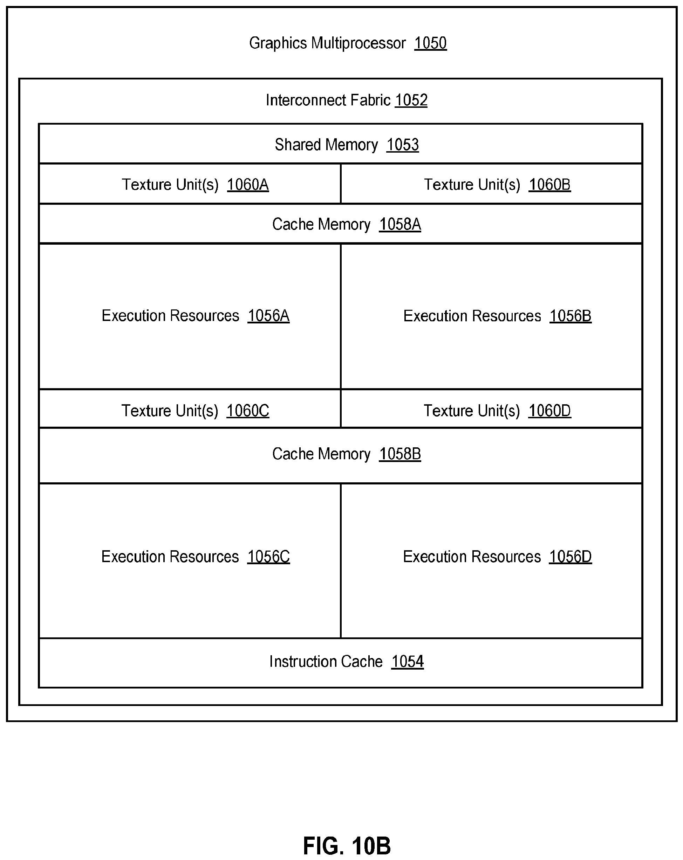

The graphics multiprocessor 1050 of FIG. 10B includes multiple sets of execution resources 1056A-1056D, where each set of execution resource includes multiple instruction units, register files, GPGPU cores, and load store units, as illustrated in FIG. 9D and FIG. 10A. The execution resources 1056A-1056D can work in concert with texture unit(s) 1060A-1060D for texture operations, while sharing an instruction cache 1054, and shared memory 1053. For example, the execution resources 1056A-1056D can share an instruction cache 1054 and shared memory 1053, as well as multiple instances of a texture and/or data cache memory 1058A-1058B. The various components can communicate via an interconnect fabric 1052 similar to the interconnect fabric 1027 of FIG. 10A.

Persons skilled in the art will understand that the architecture described in FIG. 1, 9A-9D, and 10A-10B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 902 of FIG. 9A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 10C illustrates a graphics processing unit (GPU) 1080 which includes dedicated sets of graphics processing resources arranged into multi-core groups 1065A-1065N. While the details of only a single multi-core group 1065A are provided, it will be appreciated that the other multi-core groups 1065B-1065N may be equipped with the same or similar sets of graphics processing resources. Details described with respect to the multi-core groups 1065A-1065N may also apply to any graphics multiprocessor 934, 1025, 1050 described herein.

As illustrated, a multi-core group 1065A may include a set of graphics cores 1070, a set of tensor cores 1071, and a set of ray tracing cores 1072. A scheduler/dispatcher 1068 schedules and dispatches the graphics threads for execution on the various cores 1070, 1071, 1072. A set of register files 1069 store operand values used by the cores 1070, 1071, 1072 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1073 store graphics data such as texture data, vertex data, pixel data, ray data, bounding volume data, etc., locally within each multi-core group 1065A. One or more texture units 1074 can also be used to perform texturing operations, such as texture mapping and sampling. A Level 2 (L2) cache 1075 shared by all or a subset of the multi-core groups 1065A-1065N stores graphics data and/or instructions for multiple concurrent graphics threads. As illustrated, the L2 cache 1075 may be shared across a plurality of multi-core groups 1065A-1065N. One or more memory controllers 1067 couple the GPU 1080 to a memory 1066 which may be a system memory (e.g., DRAM) and/or a dedicated graphics memory (e.g., GDDR6 memory).

Input/output (I/O) circuitry 1063 couples the GPU 1080 to one or more I/O devices 1062 such as digital signal processors (DSPs), network controllers, or user input devices. An on-chip interconnect may be used to couple the I/O devices 1062 to the GPU 1080 and memory 1066. One or more I/O memory management units (IOMMUs) 1064 of the I/O circuitry 1063 couple the I/O devices 1062 directly to the system memory 1066. Optionally, the IOMMU 1064 manages multiple sets of page tables to map virtual addresses to physical addresses in system memory 1066. The I/O devices 1062, CPU(s) 1061, and GPU(s) 1080 may then share the same virtual address space.

In one implementation of the IOMMU 1064, the IOMMU 1064 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1066). The base addresses of each of the first and second sets of page tables may be stored in control registers and swapped out on a context switch (e.g., so that the new context is provided with access to the relevant set of page tables). While not illustrated in FIG. 10C, each of the cores 1070, 1071, 1072 and/or multi-core groups 1065A-1065N may include translation lookaside buffers (TLBs) to cache guest virtual to guest physical translations, guest physical to host physical translations, and guest virtual to host physical translations.

The CPU(s) 1061, GPUs 1080, and I/O devices 1062 may be integrated on a single semiconductor chip and/or chip package. The illustrated memory 1066 may be integrated on the same chip or may be coupled to the memory controllers 1067 via an off-chip interface. In one implementation, the memory 1066 comprises GDDR6 memory which shares the same virtual address space as other physical system-level memories, although the underlying principles described herein are not limited to this specific implementation.

The tensor cores 1071 may include a plurality of execution units specifically designed to perform matrix operations, which are the fundamental compute operation used to perform deep learning operations. For example, simultaneous matrix multiplication operations may be used for neural network training and inferencing. The tensor cores 1071 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1071. The training of neural networks, in particular, requires a significant number of matrix dot product operations. In order to process an inner-product formulation of an N x N x N matrix multiply, the tensor cores 1071 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1071 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1071 support a sparse mode of operation for matrices in which the vast majority of values are zero. The tensor cores 1071 include support for sparse input matrices that are encoded in a sparse matrix representation (e.g., coordinate list encoding (COO), compressed sparse row (CSR), compress sparse column (CSC), etc.). The tensor cores 1071 also include support for compressed sparse matrix representations in the event that the sparse matrix representation may be further compressed. Compressed, encoded, and/or compressed and encoded matrix data, along with associated compression and/or encoding metadata, can be read by the tensor cores 1071 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1071, output matrix C may be output in a compressed format, a sparse encoding, or a compressed sparse encoding.

The ray tracing cores 1072 may accelerate ray tracing operations for both real-time ray tracing and non-real-time ray tracing implementations. In particular, the ray tracing cores 1072 may include ray traversal/intersection circuitry for performing ray traversal using bounding volume hierarchies (BVHs) and identifying intersections between rays and primitives enclosed within the BVH volumes. The ray tracing cores 1072 may also include circuitry for performing depth testing and culling (e.g., using a Z buffer or similar arrangement). In one implementation, the ray tracing cores 1072 perform traversal and intersection operations in concert with the image denoising techniques described herein, at least a portion of which may be executed on the tensor cores 1071. For example, the tensor cores 1071 may implement a deep learning neural network to perform denoising of frames generated by the ray tracing cores 1072. However, the CPU(s) 1061, graphics cores 1070, and/or ray tracing cores 1072 may also implement all or a portion of the denoising and/or deep learning algorithms.

In addition, as described above, a distributed approach to denoising may be employed in which the GPU 1080 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1072 may process all BVH traversal and/or ray-primitive intersections, saving the graphics cores 1070 from being overloaded with thousands of instructions per ray. For example, each ray tracing core 1072 includes a first set of specialized circuitry for performing bounding box tests (e.g., for traversal operations)and/or a second set of specialized circuitry for performing the ray-triangle intersection tests (e.g., intersecting rays which have been traversed). Thus, for example, the multi-core group 1065A can simply launch a ray probe, and the ray tracing cores 1072 independently perform ray traversal and intersection and return hit data (e.g., a hit, no hit, multiple hits, etc.) to the thread context. The other cores 1070, 1071 are freed to perform other graphics or compute work while the ray tracing cores 1072 perform the traversal and intersection operations.

Optionally, each ray tracing core 1072 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1070 and tensor cores 1071) are freed to perform other forms of graphics work.

In some examples described below, a hybrid rasterization/ray tracing approach is used in which work is distributed between the graphics cores 1070 and ray tracing cores 1072.

The ray tracing cores 1072 (and/or other cores 1070, 1071) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1072, graphics cores 1070 and tensor cores 1071 is Vulkan API (e.g., Vulkan version 1.1.85 and later). Note, however, that the underlying principles described herein are not limited to any particular ray tracing ISA.

In general, the various cores 1072, 1071, 1070 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1072 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1072 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1072 can also be used to perform computations that are not directly analogous to ray tracing. For example, mesh projection, mesh refinement, and volume sampling computations can be accelerated using the ray tracing cores 1072. Generic coordinate space calculations, such as nearest neighbor calculations can also be performed. For example, the set of points near a given point can be discovered by defining a bounding box in the coordinate space around the point. BVH and ray probe logic within the ray tracing cores 1072 can then be used to determine the set of point intersections within the bounding box. The intersections constitute the origin point and the nearest neighbors to that origin point. Computations that are performed using the ray tracing cores 1072 can be performed in parallel with computations performed on the graphics cores 1072 and tensor cores 1071. A shader compiler can be configured to compile a compute shader or other general-purpose graphics processing program into low level primitives that can be parallelized across the graphics cores 1070, tensor cores 1071, and ray tracing cores 1072.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

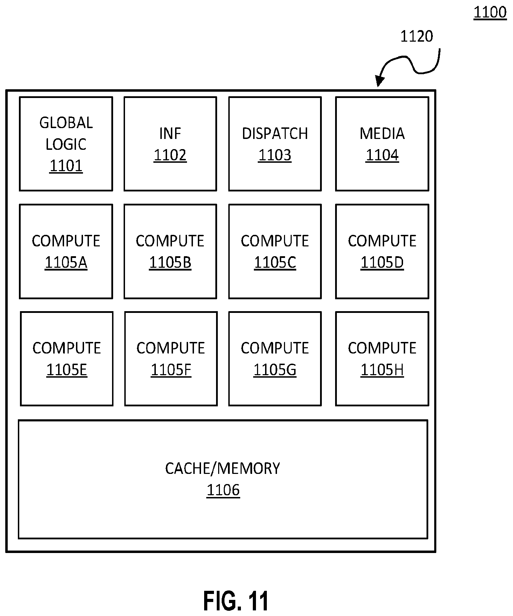

FIG. 11 shows a parallel compute system 1100, according to some examples. In some examples the parallel compute system 1100 includes a parallel processor 1120, which can be a graphics processor or compute accelerator as described herein. The parallel processor 1120 includes a global logic unit 1101, an interface 1102, a thread dispatcher 1103, a media unit 1104, a set of compute units 1105A-1105H, and a cache/memory units 1106. The global logic unit 1101, in some examples, includes global functionality for the parallel processor 1120, including device configuration registers, global schedulers, power management logic, and the like. The interface 1102 can include a front-end interface for the parallel processor 1120. The thread dispatcher 1103 can receive workloads from the interface 1102 and dispatch threads for the workload to the compute units 1105A-1105H. If the workload includes any media operations, at least a portion of those operations can be performed by the media unit 1104. The media unit can also offload some operations to the compute units 1105A-1105H. The cache/memory units 1106 can include cache memory (e.g., L3 cache) and local memory (e.g., HBM, GDDR) for the parallel processor 1120. Compute units 1105 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

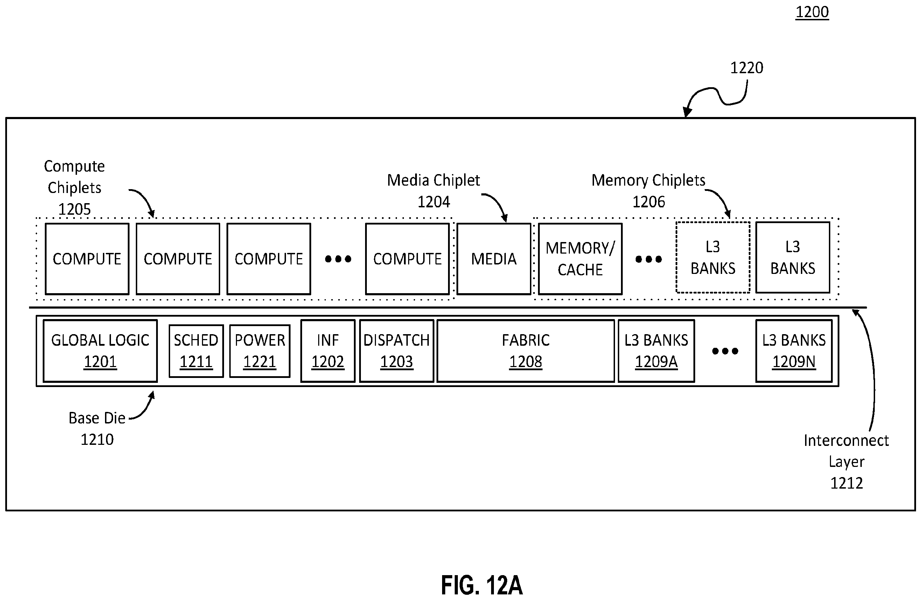

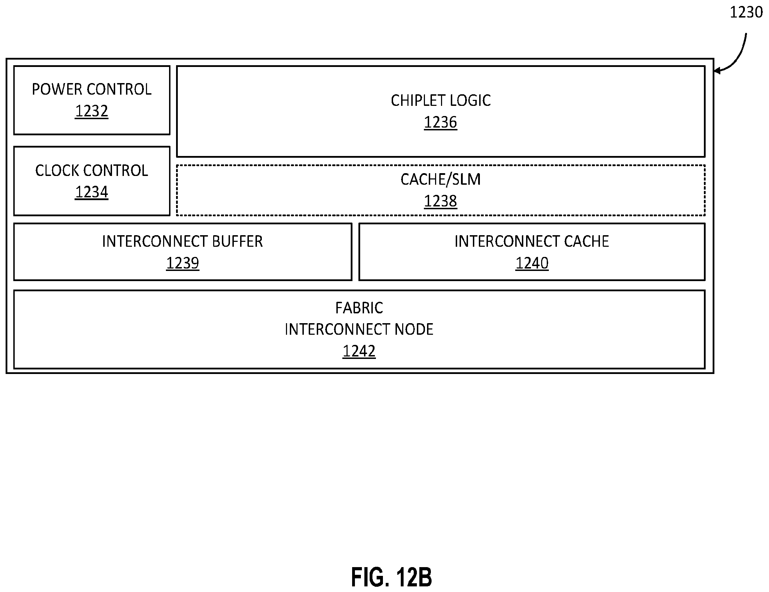

FIGS. 12A-12B illustrate a hybrid logical/physical view of a disaggregated parallel processor, according to examples described herein. FIG. 12A illustrates a disaggregated parallel compute system 1200. FIG. 12B illustrates a chiplet 1230 of the disaggregated parallel compute system 1200.

As shown in FIG. 12A, a disaggregated parallel compute system 1200 can include a parallel processor 1220 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1205, a media chiplet 1204, and memory chiplets 1206. Each chiplet can be separately manufactured using different process technologies. For example, compute chiplets 1205 may be manufactured using the smallest or most advanced process technology available at the time of fabrication, while memory chiplets 1206 or other chiplets (e.g., I/O, networking, etc.) may be manufactured using a larger or less advanced process technologies.

The various chiplets can be bonded to a base die 1210 and configured to communicate with each other and logic within the base die 1210 via an interconnect layer 1212. In some examples, the base die 1210 can include global logic 1201, which can include scheduler 1211 and power management 1221 logic units, an interface 1202, a dispatch unit 1203, and an interconnect fabric 1208 coupled with or integrated with one or more L3 cache banks 1209A-1209N. The interconnect fabric 1208 can be an inter-chiplet fabric that is integrated into the base die 1210. Logic chiplets can use the fabric 1208 to relay messages between the various chiplets. Additionally, L3 cache banks 1209A-1209N in the base die and/or L3 cache banks within the memory chiplets 1206 can cache data read from and transmitted to DRAM chiplets within the memory chiplets 1206 and to system memory of a host.

In some examples the global logic 1201 is a microcontroller that can execute firmware to perform scheduler 1211 and power management 1221 functionality for the parallel processor 1220. The microcontroller that executes the global logic can be tailored for the target use case of the parallel processor 1220. The scheduler 1211 can perform global scheduling operations for the parallel processor 1220. The power management 1221 functionality can be used to enable or disable individual chiplets within the parallel processor when those chiplets are not in use.

The various chiplets of the parallel processor 1220 can be designed to perform specific functionality that, in existing designs, would be integrated into a single die. A set of compute chiplets 1205 can include clusters of compute units (e.g., execution units, streaming multiprocessors, etc.) that include programmable logic to execute compute or graphics shader instructions. A media chiplet 1204 can include hardware logic to accelerate media encode and decode operations. Memory chiplets 1206 can include volatile memory (e.g., DRAM) and one or more SRAM cache memory banks (e.g., L3 banks).

As shown in FIG. 12B, each chiplet 1230 can include common components and application specific components. Chiplet logic 1236 within the chiplet 1230 can include the specific components of the chiplet, such as an array of streaming multiprocessors, compute units, or execution units described herein. The chiplet logic 1236 can couple with an optional cache or shared local memory 1238 or can include a cache or shared local memory within the chiplet logic 1236. The chiplet 1230 can include a fabric interconnect node 1242 that receives commands via the inter-chiplet fabric. Commands and data received via the fabric interconnect node 1242 can be stored temporarily within an interconnect buffer 1239. Data transmitted to and received from the fabric interconnect node 1242 can be stored in an interconnect cache 1240. Power control 1232 and clock control 1234 logic can also be included within the chiplet. The power control 1232 and clock control 1234 logic can receive configuration commands via the fabric can configure dynamic voltage and frequency scaling for the chiplet 1230. In some examples, each chiplet can have an independent clock domain and power domain and can be clock gated and power gated independently of other chiplets.

At least a portion of the components within the illustrated chiplet 1230 can also be included within logic embedded within the base die 1210 of FIG. 12A. For example, logic within the base die that communicates with the fabric can include a version of the fabric interconnect node 1242. Base die logic that can be independently clock or power gated can include a version of the power control 1232 and/or clock control 1234 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

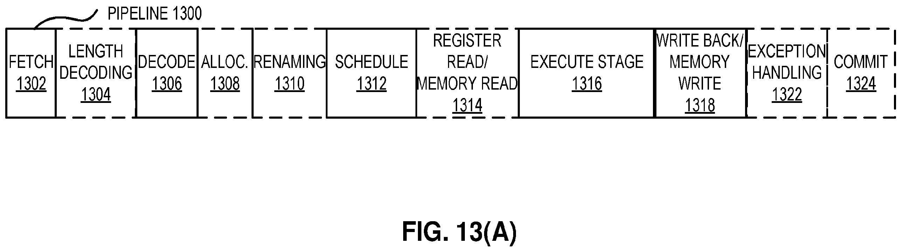

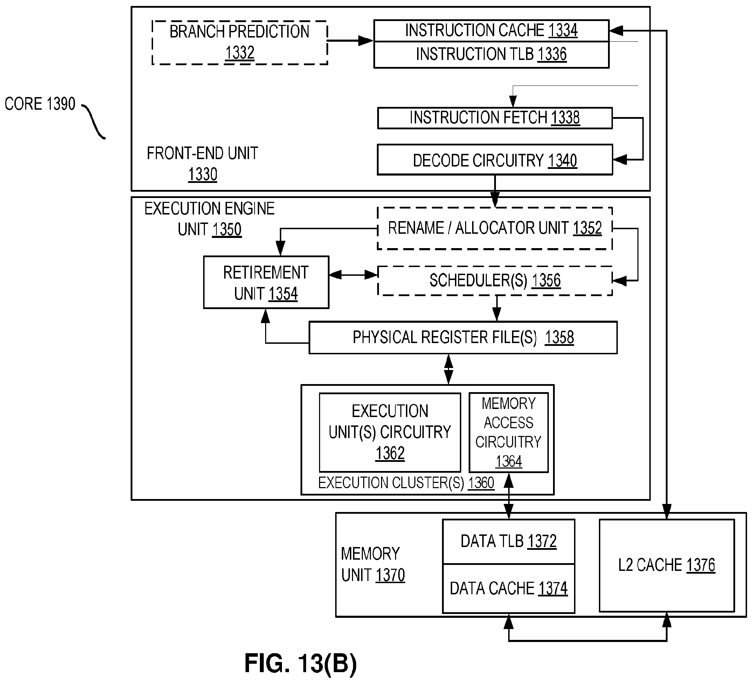

FIG. 13(A) is a block diagram illustrating both an example in-order pipeline and an example register renaming, out-of-order issue/execution pipeline according to examples. FIG. 13(B) is a block diagram illustrating both an example in-order architecture core and an example register renaming, out-of-order issue/execution architecture core to be included in a processor according to examples. The solid lined boxes in FIGS. 13(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 13(A), a processor pipeline 1300 includes a fetch stage 1302, an optional length decoding stage 1304, a decode stage 1306, an optional allocation (Alloc) stage 1308, an optional renaming stage 1310, a schedule (also known as a dispatch or issue) stage 1312, an optional register read/memory read stage 1314, an execute stage 1316, a write back/memory write stage 1318, an optional exception handling stage 1322, and an optional commit stage 1324. One or more operations can be performed in each of these processor pipeline stages. For example, during the fetch stage 1302, one or more instructions are fetched from instruction memory, and during the decode stage 1306, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1306 and the register read/memory read stage 1314 may be combined into one pipeline stage. In some examples, during the execute stage 1316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 13(B) may implement the pipeline 1300 as follows: 1) the instruction fetch circuitry 1338 performs the fetch and length decoding stages 1302 and 1304; 2) the decode circuitry 1340 performs the decode stage 1306; 3) the rename/allocator unit circuitry 1352 performs the allocation stage 1308 and renaming stage 1310; 4) the scheduler(s) circuitry 1356 performs the schedule stage 1312; 5) the physical register file(s) circuitry 1358 and the memory unit circuitry 1370 perform the register read/memory read stage 1314; the execution cluster(s) 1360 perform the execute stage 1316; 6) the memory unit circuitry 1370 and the physical register file(s) circuitry 1358 perform the write back/memory write stage 1318; 7) various circuitry may be involved in the exception handling stage 1322; and 8) the retirement unit circuitry 1354 and the physical register file(s) circuitry 1358 perform the commit stage 1324.

FIG. 13(B) shows a processor core 1390 including front-end unit circuitry 1330 coupled to execution engine unit circuitry 1350, and both are coupled to memory unit circuitry 1370. The core 1390 may be a reduced instruction set architecture computing (RISC) core, a complex instruction set architecture computing (CISC) core, a very long instruction word (VLIW) core, or a hybrid or alternative core type. As yet another option, the core 1390 may be a special-purpose core, such as, for example, a network or communication core, compression engine, co-processor core, general purpose computing graphics processing unit (GPGPU) core, graphics core, or the like.

The front-end unit circuitry 1330 may include branch prediction circuitry 1332 coupled to instruction cache circuitry 1334, which is coupled to an instruction translation lookaside buffer (TLB) 1336, which is coupled to instruction fetch circuitry 1338, which is coupled to decode circuitry 1340. In some examples, the instruction cache circuitry 1334 is included in the memory unit circuitry 1370 rather than the front-end unit circuitry 1330. The decode circuitry 1340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1340 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1340 may be implemented using various different mechanisms. Examples of suitable mechanisms include, but are not limited to, look-up tables, hardware implementations, programmable logic arrays (PLAs), microcode read only memories (ROMs), etc. In some examples, the core 1390 includes a microcode ROM (not shown) or other medium that stores microcode for certain macroinstructions (e.g., in decode circuitry 1340 or otherwise within the front-end unit circuitry 1330). In some examples, the decode circuitry 1340 includes a micro-operation (micro-op) or operation cache (not shown) to hold/cache decoded operations, micro-tags, or micro-operations generated during the decode or other stages of the processor pipeline 1300. The decode circuitry 1340 may be coupled to rename/allocator unit circuitry 1352 in the execution engine unit circuitry 1350.

The execution engine unit circuitry 1350 includes the rename/allocator unit circuitry 1352 coupled to retirement unit circuitry 1354 and a set of one or more scheduler(s) circuitry 1356. The scheduler(s) circuitry 1356 represents any number of different schedulers, including reservations stations, central instruction window, etc. In some examples, the scheduler(s) circuitry 1356 can include arithmetic logic unit (ALU) scheduler/scheduling circuitry, ALU queues, address generation unit (AGU) scheduler/scheduling circuitry, AGU queues, etc. The scheduler(s) circuitry 1356 is coupled to the physical register file(s) circuitry 1358. Each of the physical register file(s) circuitry 1358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1358 includes vector registers unit circuitry, writemask registers unit circuitry, and scalar register unit circuitry. These register units may provide architectural vector registers, vector mask registers, general-purpose registers, etc. The physical register file(s) circuitry 1358 is coupled to the retirement unit circuitry 1354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1354 and the physical register file(s) circuitry 1358 are coupled to the execution cluster(s) 1360. The execution cluster(s) 1360 includes a set of one or more execution unit(s) circuitry 1362 and a set of one or more memory access circuitry 1364. The execution unit(s) circuitry 1362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some examples, execution unit(s) circuitry 1362 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1356, physical register file(s) circuitry 1358, and execution cluster(s) 1360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1364). It should also be understood that where separate pipelines are used, one or more of these pipelines may be out-of-order issue/execution and the rest in-order.

In some examples, the execution engine unit circuitry 1350 may perform load store unit (LSU) address/data pipelining to an Advanced Microcontroller Bus (AMB) interface (not shown), and address phase and writeback, data phase load, store, and branches.

The set of memory access circuitry 1364 is coupled to the memory unit circuitry 1370, which includes data TLB circuitry 1372 coupled to data cache circuitry 1374 coupled to level 2 (L2) cache circuitry 1376. In some examples, the memory access circuitry 1364 may include load unit circuitry, store address unit circuitry, and store data unit circuitry, each of which is coupled to the data TLB circuitry 1372 in the memory unit circuitry 1370. The instruction cache circuitry 1334 is further coupled to the level 2 (L2) cache circuitry 1376 in the memory unit circuitry 1370. In some examples, the instruction cache 1334 and the data cache 1374 are combined into a single instruction and data cache (not shown) in L2 cache circuitry 1376, level 3 (L3) cache circuitry (not shown), and/or main memory. The L2 cache circuitry 1376 is coupled to one or more other levels of cache and eventually to a main memory.

The core 1390 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 1390 includes logic to support a packed data instruction set architecture extension (e.g., AVX1, AVX2, AVX512, AMX, etc.), thereby allowing the operations used by many multimedia applications to be performed using packed data.

### Example Execution Unit(s) Circuitry.

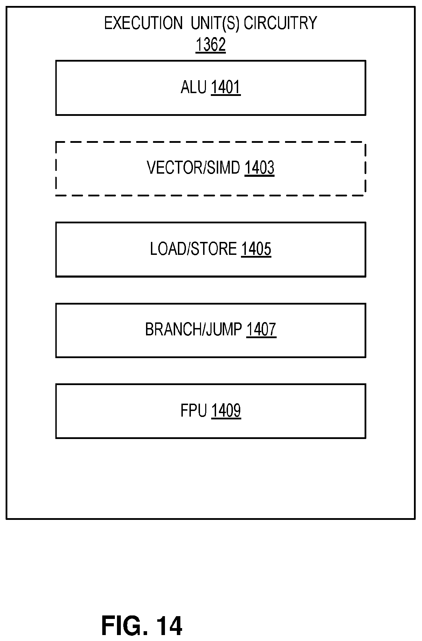

FIG. 14 illustrates examples of execution unit(s) circuitry, such as execution unit(s) circuitry 1362 of FIG. 13(B). As illustrated, execution unit(s) circuitry 1362 may include one or more ALU circuits 1401, optional vector/single instruction multiple data (SIMD) circuits 1403, load/store circuits 1405, branch/jump circuits 1407, and/or Floating-point unit (FPU) circuits 1409. ALU circuits 1401 perform integer arithmetic and/or Boolean operations. Vector/SIMD circuits 1403 perform vector/SIMD operations on packed data (such as SIMD/vector registers). Load/store circuits 1405 execute load and store instructions to load data from memory into registers or store from registers to memory. Load/store circuits 1405 may also generate addresses. Branch/jump circuits 1407 cause a branch or jump to a memory address depending on the instruction. FPU circuits 1409 perform floating-point arithmetic. The width of the execution unit(s) circuitry 1362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

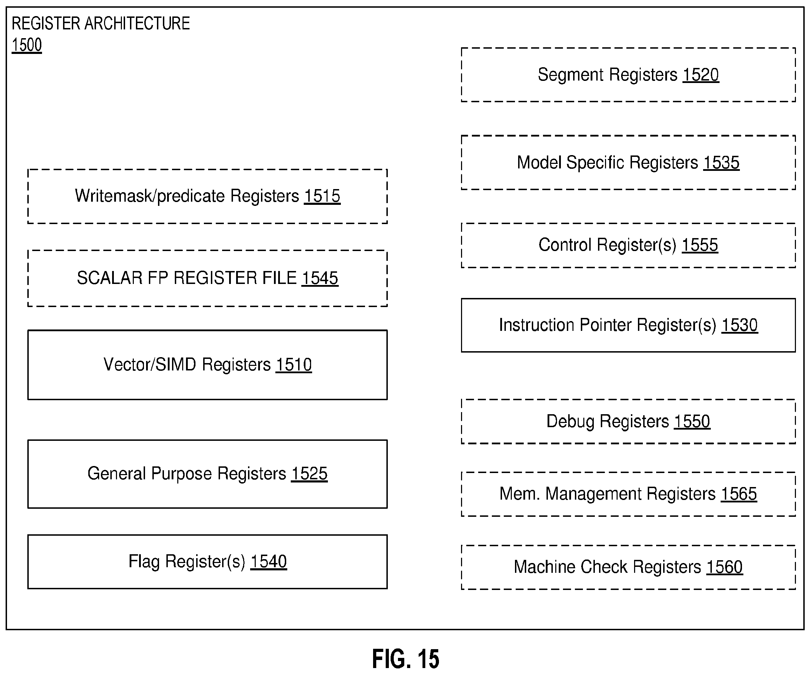

FIG. 15 is a block diagram of a register architecture 1500 according to some examples. As illustrated, the register architecture 1500 includes vector/SIMD registers 1510 that vary from 128-bit to 1,024 bits width. In some examples, the vector/SIMD registers 1510 are physically 512-bits and, depending upon the mapping, only some of the lower bits are used. For example, in some examples, the vector/SIMD registers 1510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1500 includes writemask/predicate registers 1515. For example, in some examples, there are 8 writemask/predicate registers (sometimes called k0 through k7) that are each 16-bit, 32-bit, 64-bit, or 128-bit in size. Writemask/predicate registers 1515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1515 corresponds to a data element position of the destination. In other examples, the writemask/predicate registers 1515 are scalable and consists of a set number of enable bits for a given vector element (e.g., 8 enable bits per 64-bit vector element).

The register architecture 1500 includes a plurality of general-purpose registers 1525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1500 includes scalar floating-point (FP) register file 1545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1540 (e.g., EFLAGS, RFLAGS, etc.) store status and control information for arithmetic, compare, and system operations. For example, the one or more flag registers 1540 may store condition code information such as carry, parity, auxiliary carry, zero, sign, and overflow. In some examples, the one or more flag registers 1540 are called program status and control registers.

Segment registers 1520 contain segment points for use in accessing memory. In some examples, these registers are referenced by the names CS, DS, SS, ES, FS, and GS.

Model specific registers or machine specific registers (MSRs) 1535 control and report on processor performance. Most MSRs 1535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1560 consist of control, status, and error reporting MSRs that are used to detect and report on hardware errors. Control register(s) 1555 (e.g., CR0-CR4) determine the operating mode of a processor (e.g., processor 670, 680, 638, 615, and/or 700) and the characteristics of a currently executing task. In some examples, MSRs 1535 are a subset of control registers 1555.

One or more instruction pointer register(s) 1530 store an instruction pointer value. Debug registers 1550 control and allow for the monitoring of a processor or core's debugging operations.

Memory (mem) management registers 1565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1500 may, for example, be used in register file / memory ISAB08, or physical register file(s) circuitry 13 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

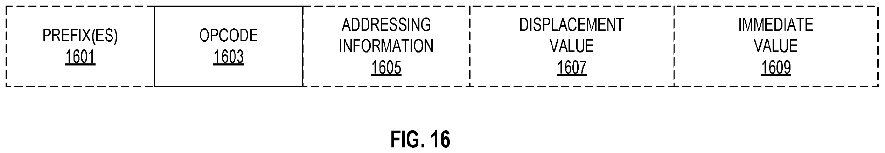

FIG. 16 illustrates examples of an instruction format. As illustrated, an instruction may include multiple components including, but not limited to, one or more fields for: one or more prefixes, an opcode, addressing information (e.g., register identifiers, memory addressing information, etc.), a displacement value, and/or an immediate value. Note that some instructions utilize some or all the fields of the format whereas others may only use the field for the opcode 1603. In some examples, the order illustrated is the order in which these fields are to be encoded, however, it should be appreciated that in other examples these fields may be encoded in a different order, combined, etc.

The prefix(es) f 1601, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1603 is used to at least partially define the operation to be performed upon a decoding of the instruction. In some examples, a primary opcode encoded in the opcode field 1603 is one, two, or three bytes in length. In other examples, a primary opcode can be a different length. An additional 3-bit opcode field is sometimes encoded in another field.

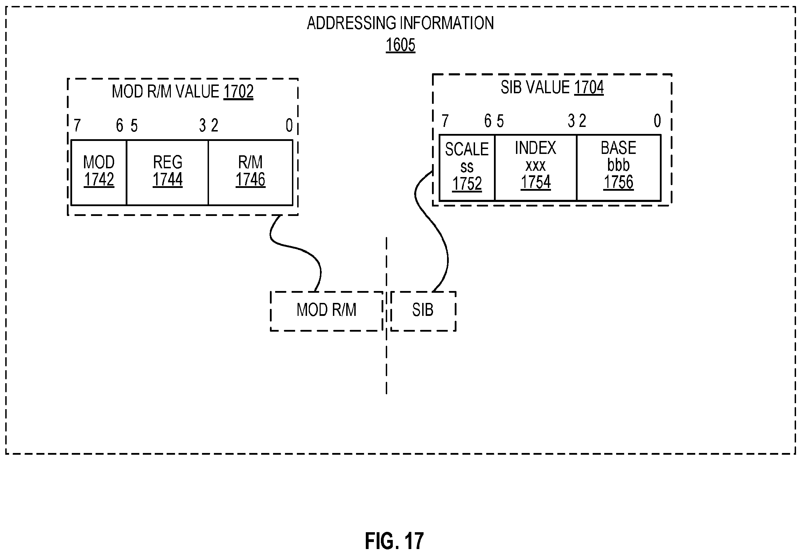

The addressing information field 1605 is used to address one or more operands of the instruction, such as a location in memory or one or more registers. FIG. 17 illustrates examples of the addressing information field 1605. In this illustration, an optional MOD R/M byte 1702 and an optional Scale, Index, Base (SIB) byte 1704 are shown. The MOD R/M byte 1702 and the SIB byte 1704 are used to encode up to two operands of an instruction, each of which is a direct register or effective memory address. Note that both of these fields are optional in that not all instructions include one or more of these fields. The MOD R/M byte 1702 includes a MOD field 1742, a register (reg) field 1744, and R/M field 1746.

The content of the MOD field 1742 distinguishes between memory access and non-memory access modes. In some examples, when the MOD field 1742 has a binary value of 11 (11b), a register-direct addressing mode is utilized, and otherwise a register-indirect addressing mode is used.

The register field 1744 may encode either the destination register operand or a source register operand or may encode an opcode extension and not be used to encode any instruction operand. The content of register field 1744, directly or through address generation, specifies the locations of a source or destination operand (either in a register or in memory). In some examples, the register field 1744 is supplemented with an additional bit from a prefix (e.g., prefix 1601) to allow for greater addressing.

The R/M field 1746 may be used to encode an instruction operand that references a memory address or may be used to encode either the destination register operand or a source register operand. Note the R/M field 1746 may be combined with the MOD field 1742 to dictate an addressing mode in some examples.

The SIB byte 1704 includes a scale field 1752, an index field 1754, and a base field 1756 to be used in the generation of an address. The scale field 1752 indicates a scaling factor. The index field 1754 specifies an index register to use. In some examples, the index field 1754 is supplemented with an additional bit from a prefix (e.g., prefix 1601) to allow for greater addressing. The base field 1756 specifies a base register to use. In some examples, the base field 1756 is supplemented with an additional bit from a prefix (e.g., prefix 1601) to allow for greater addressing. In practice, the content of the scale field 1752 allows for the scaling of the content of the index field 1754 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1607 provides this value. Additionally, in some examples, a displacement factor usage is encoded in the MOD field of the addressing information field 1605 that indicates a compressed displacement scheme for which a displacement value is calculated and stored in the displacement field 1607.

In some examples, the immediate value field 1609 specifies an immediate value for the instruction. An immediate value may be encoded as a 1-byte value, a 2-byte value, a 4-byte value, etc.

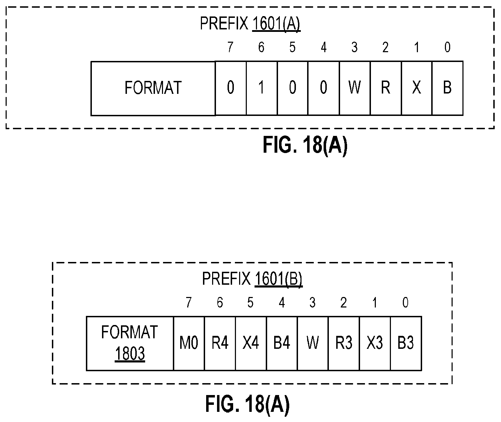

FIGS. 18(A)-(B) illustrate examples of a first prefix 1601(A). FIG. 18(A) illustrates first examples of the first prefix 1601(A). In some examples, the first prefix 1601(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1601(A) may specify up to three registers using 3-bit fields depending on the format: 1) using the reg field 1744 and the R/M field 1746 of the MOD R/M byte 1702; 2) using the MOD R/M byte 1702 with the SIB byte 1704 including using the reg field 1744 and the base field 1756 and index field 1754; or 3) using the register field of an opcode.

In the first prefix 1601(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1744 and MOD R/M R/M field 1746 alone can each only address 8 registers.

In the first prefix 1601(A), bit position 2 (R) may be an extension of the MOD R/M reg field 1744 and may be used to modify the MOD R/M reg field 1744 when that field encodes a general-purpose register, a 64-bit packed data register (e.g., a SSE register), or a control or debug register. R is ignored when MOD R/M byte 1702 specifies other registers or defines an extended opcode.

### Bit position 1 (X) may modify the SIB byte index field 1754.

Bit position 0 (B) may modify the base in the MOD R/M R/M field 1746 or the SIB byte base field 1756; or it may modify the opcode register field used for accessing general purpose registers (e.g., general purpose registers 1525).

FIG. 18(B) illustrates second examples of the first prefix 1601(A). In some examples, the prefix 1601(A) supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsinged integer addition of two operands with overflow flag, conditional move, pop, push, etc. support REX2.

As shown, REX2 has a format field 1803 in a first byte and 8 bits in a second byte (e.g., a payload byte). In some examples, the format field 303 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 18(B).

### The payload byte includes several bits.

Bit position 0 (B3) may modify the base in the MOD R/M R/M field 1746 or the SIB byte base field 1756; or it may modify the opcode register field used for accessing general purpose registers (e.g., general purpose registers 1525).

### Bit position 1 (X3) may modify the SIB byte index field 1754.

Bit position 2 (R3) may be used as an extension of the MOD R/M reg field 1744 and may be used to modify the MOD R/M reg field 1744 when that field encodes a general-purpose register, a 64-bit packed data register (e.g., an SSE register), or a control or debug register. R3 may be ignored when MOD R/M byte 1702 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 1746 or the SIB byte base field 1756; or it may modify the opcode register field used for accessing general purpose registers (e.g., general purpose registers 1525).

### Bit position 5 (X4) may further (along with X3) modify the SIB byte index field 1754.

Bit position 6 (R4) may further (along with R3) be used as an extension of the MOD R/M reg field 1744 and may be used to modify the MOD R/M reg field 1744 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50-0x5F(including POP and PUSH) use R4 to encode a push-pop acceleration hint.

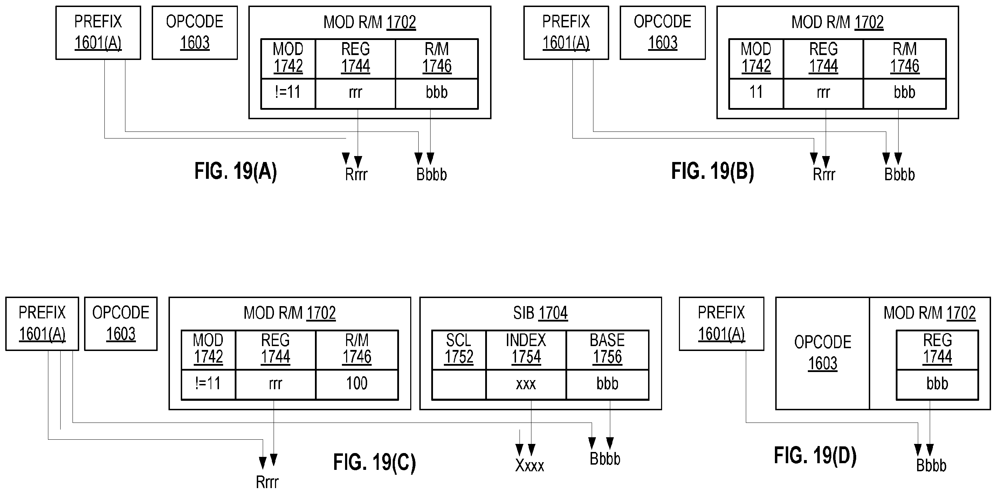

FIGS. 19(A)-(D) illustrate examples of how the R, X, and B fields of the first prefix 1601(A) are used. FIG. 19(A) illustrates R and B from the first prefix 1601(A) being used to extend the reg field 1744 and R/M field 1746 of the MOD R/M byte 1702 when the SIB byte 1704 is not used for memory addressing. FIG. 19(B) illustrates R and B from the first prefix 1601(A) being used to extend the reg field 1744 and R/M field 1746 of the MOD R/M byte 1702 when the SIB byte 17 04 is not used (register-register addressing). FIG. 19(C) illustrates R, X, and B from the first prefix 1601(A) being used to extend the reg field 1744 of the MOD R/M byte 1702 and the index field 1754 and base field 1756 when the SIB byte 17 04 being used for memory addressing. FIG. 19(D) illustrates B from the first prefix 1601(A) being used to extend the reg field 1744 of the MOD R/M byte 1702 when a register is encoded in the opcode 1603. The R4 and R3 values of FIG. 18(B) can be used to expand rrr, B4 and B3 can be used to expand bbb, and X4 and X3 can be used to expand xxx.

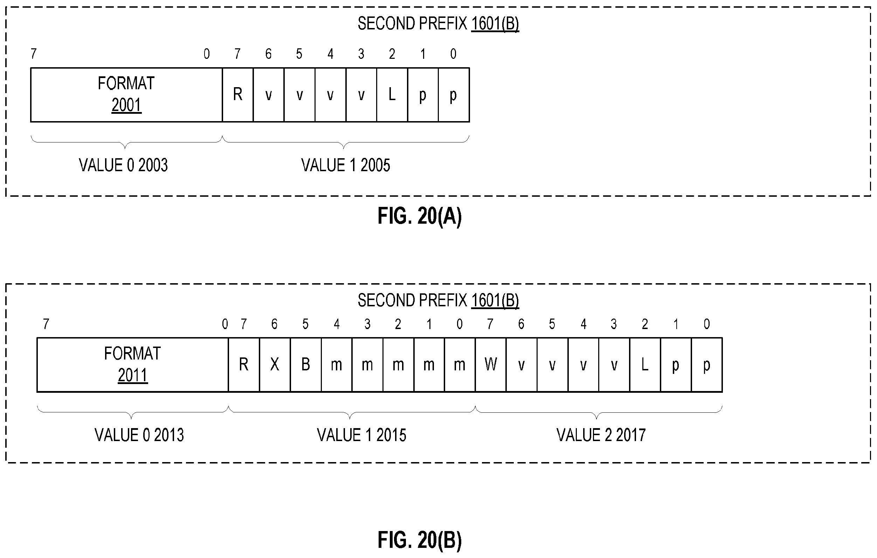

FIGS. 20(A)-(B) illustrate examples of a second prefix 1601(B). In some examples, the second prefix 1601(B) is an example of a VEX prefix. The second prefix 1601(B) encoding allows instructions to have more than two operands, and allows SIMD vector registers (e.g., vector/SIMD registers 1510) to be longer than 64-bits (e.g., 128-bit and 256-bit). The use of the second prefix 1601(B) provides for three-operand (or more) syntax. For example, previous two-operand instructions performed operations such as A = A + B, which overwrites a source operand. The use of the second prefix 1601(B) enables operands to perform nondestructive operations such as A = B + C.

In some examples, the second prefix 1601(B) comes in two forms - a two-byte form and a three-byte form. The two-byte second prefix 1601(B) is used mainly for 128-bit, scalar, and some 256-bit instructions; while the three-byte second prefix 1601(B) provides a compact replacement of the first prefix 1601(A) and 3-byte opcode instructions.

FIG. 20(A) illustrates examples of a two-byte form of the second prefix 1601(B). In some examples, a format field 2001 (byte 0 2003) contains the value C5H. In some examples, byte 1 2005 includes an "R" value in bit[7]. This value is the complement of the "R" value of the first prefix 1601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746 and the MOD R/M reg field 1744 encode three of the four operands. Bits[7:4] of the immediate value field 1609 are then used to encode the third source register operand.

FIG. 20(B) illustrates examples of a three-byte form of the second prefix 1601(B). In some examples, a format field 2011 (byte 0 2013) contains the value C4H. Byte 1 2015 includes in bits[7:5] "R," "X," and "B" which are the complements of the same values of the first prefix 1601(A). Bits[4:0] of byte 1 2015 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2017 is used similar to W of the first prefix 1601 (A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746, and the MOD R/M reg field 1744 encode three of the four operands. Bits[7:4] of the immediate value field 1609 are then used to encode the third source register operand.

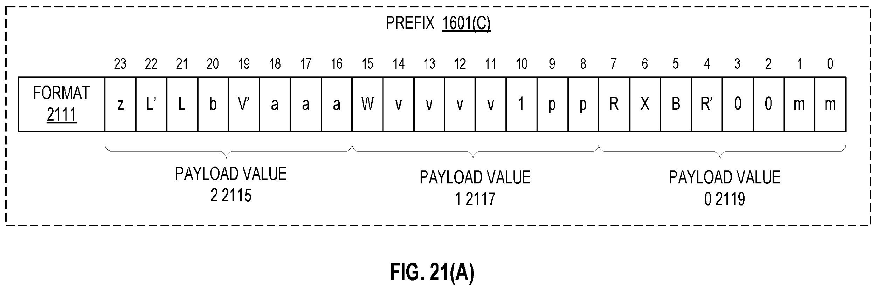

FIGS. 21(A)-(E) illustrate examples of a third prefix 1601(C). FIG. 21(A) illustrates first examples of the third prefix. In some examples, the third prefix 1601(C) is an example of an EVEX prefix. The third prefix 1601(C) is a four-byte prefix.

The third prefix 1601(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 15) or predication utilize this prefix. Opmask register allow for conditional processing or selection control. Opmask instructions, whose source/destination operands are opmask registers and treat the content of an opmask register as a single value, are encoded using the second prefix 1601(B).

The third prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1601(C) is a format field 2111 that has a value, in some examples, of 62H. Subsequent bytes are referred to as payload bytes 2115-2119 and collectively form a 24-bit value of P[23:0] providing specific capability in the form of one or more fields (detailed herein).

In some examples, P[1:0] of payload byte 2119 are identical to the low two mm bits. P[3:2] are reserved in some examples. Bit P[4](R') allows access to the high 16 vector register set when combined with P[7] and the MOD R/M reg field 1744. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1744 and MOD R/M R/M field 1746. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1601(A) and second prefix 1611(B) and may serve as an opcode extension bit or operand size promotion.

P[18:16] specify the index of a register in the opmask (writemask) registers (e.g., writemask/predicate registers 1515). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1601(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

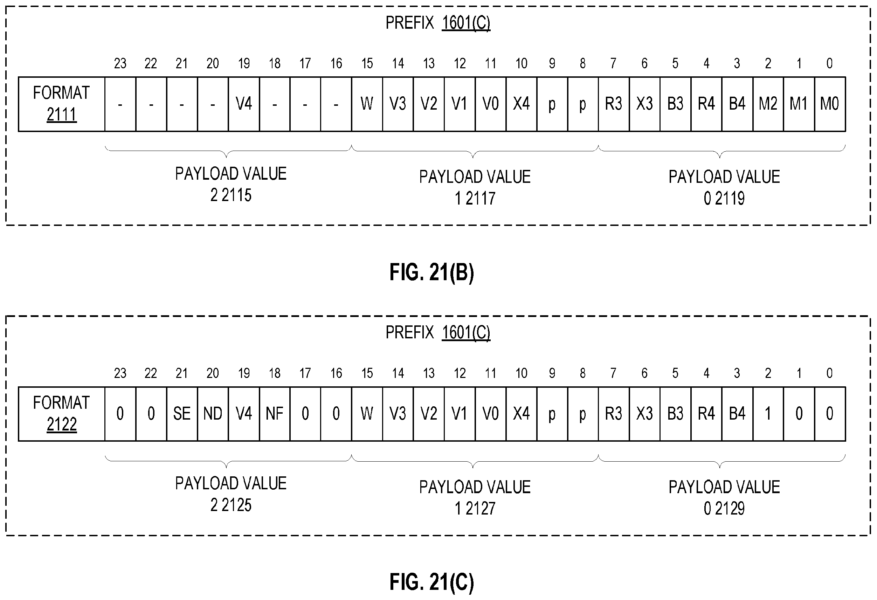

FIG. 21(B) illustrates second examples of the third prefix. In some examples, the prefix 17K01 (B) is an example of an EVEX2 prefix. The EVEX2 prefix 1601(C) is a four-byte prefix.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, pop, push, leading zero count, total zero count, unsinged integer addition of two operands with carry flag, unsinged integer addition of two operands with overflow flag, conditional move, etc. support EVEX2.

For these instructions it should be noted that NDD may or may not be used depending on the settings of the prefix of those instructions.

The extended EVEX prefix is an extension of a 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 1601(B) can encode 32 vector registers (e.g., 128-bit, 256-bit, and 512-bit registers) in 64-bit mode and/or 32 general purpose registers.

The EVEX2 prefix 1601(B) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1601(B) is a format field 2111 that has a value, in some examples, of 0x62. Subsequent bytes are referred to as payload bytes 2115-2119 and collectively form a 24-bit value of P[23:0] providing specific capability in the form of one or more fields (detailed herein).

Bits 0:2 (M0, M1, and M2) of a first payload byte (payload byte 0) 2117 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bit 19 can be combined with bits 14:11 to encode a register in a new data destination.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1601(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1^{st} Source or Destination |
| BASE | B4 | B3 | MOD R/M R/M | GPR | Memory addressing |
| INDEX | X4 | X3 | SIB.index | GPR | Memory addressing |

FIG. 21(C) illustrates third examples of the third prefix. In some examples, the prefix 1601(C) is an example of an EVEX2 prefix. The EVEX2 prefix 1601(C) is a four-byte prefix.

The EVEX2 prefix 1601(C) can encode at least 32 vector registers (e.g., 128-bit, 256-bit, and 512-bit registers) in 64-bit mode and/or up to 64 general purpose registers.

The EVEX2 prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1601(C) is a format field 2122 that has a value, in one example, of 0x62. Subsequent bytes are referred to as payload bytes 555-2129 and collectively form a 24-bit value of P[23:0] providing specific capability in the form of one or more fields (detailed herein).

Bits 0:1 are set to zero and bit 2 is set to 1.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated. In some examples, instructions for increment, decrement, negation, addition, subtraction, AND, OR, shift arithmetically left, shift logically left, shift arithmetically right, shift logically right, rotate left, rotate right, multiply, divide, population count, leading zero count, total zero count, etc. support flag suppression.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

Bit 21 is used in some examples to indicate exceptions are to be suppressed.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1601(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1^{st} Source or Destination |
| BASE | B4 | B3 | MOD R/M R/M | GPR | Memory addressing |
| INDEX | X4 | X3 | SIB.index | GPR | Memory addressing |

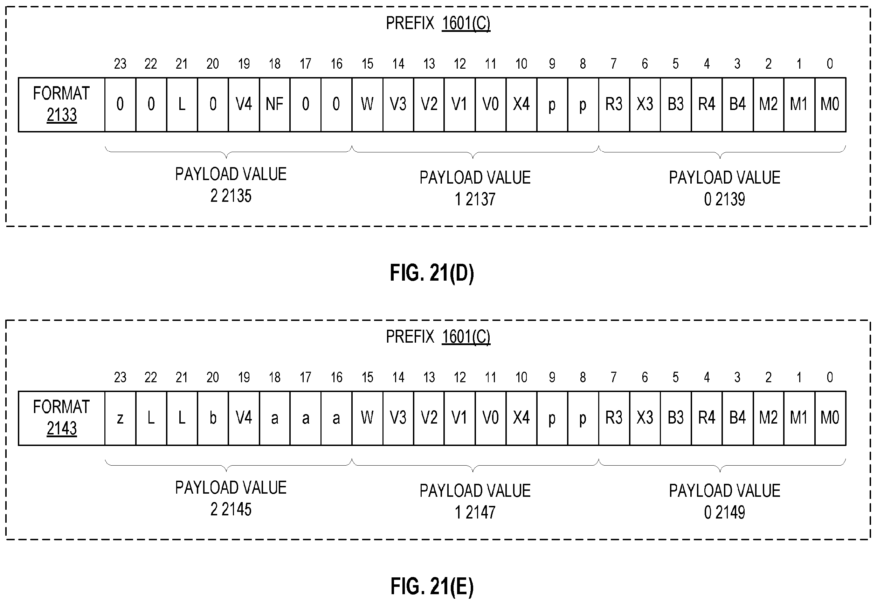

FIG. 21(D) illustrates fourth examples of the third prefix. In some examples, the prefix 1601(C) is an example of an EVEX2 prefix. The EVEX2 prefix 1601(C) is a four-byte prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 1601(C) can encode 32 vector registers (e.g., 128-bit, 256-bit, and 512-bit registers) in 64-bit mode and/or 32 general purpose registers.

The EVEX2 prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1601(C) is a format field 2133 that has a value, in some examples, of 0x62. Subsequent bytes are referred to as payload bytes 2135-2139 and collectively form a 24-bit value of P[23:0] providing specific capability in the form of one or more fields (detailed herein).

Bits 0:2 (M0, M1, and M2) of a first payload byte (payload byte 0) 2139 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bits 20, 22, and 23 are zero.

Bit 21 is a length specifier field
In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1601(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1^{st} Source or Destination |
| BASE | B4 | B3 | MOD R/M R/M | GPR | Memory addressing |
| INDEX | X4 | X3 | SIB.index | GPR | Memory addressing |

FIG. 21(E) illustrates fifth examples of the third prefix. In some examples, the prefix 1601(C) is an example of an EVEX2 prefix. The EVEX2 prefix 1601(C) is a four-byte prefix.

The EVEX2 prefix 1601(C) can encode at least 32 vector registers (e.g., 128-bit, 256-bit, and 512-bit registers) in 64-bit mode and/or up to 64 general purpose registers. I

The EVEX2 prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1601(C) is a format field 2143 that has a value, in one example, of 0x62. Subsequent bytes are referred to as payload bytes 2145-2149 and collectively form a 24-bit value of P[23:0] providing specific capability in the form of one or more fields (detailed herein).

Bits 0:2 (M0, M1, and M2) of a first payload byte (payload byte 0) 2139 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:18 specify the index of a register in the opmask (writemask) registers (e.g., writemask/predicate registers 2615). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

Bit 19 can be combined with bits 14:11 to encode a register in a new data destination.

Bit 20 encodes multiple functionalities, which differ across different classes of instructions and can affect the meaning of the vector length/ rounding control specifier field bits 21:22]).

Bit 23 indicates support for merging-writemasking (e.g., when set to 0) or support for zeroing and merging-writemasking (e.g., when set to 1).

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1601(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

The table below illustrates the new prefixes and how they differ from at least one legacy format. Note that OP is an operation to be performed.

| Legacy Format | APX REX2 (No-NDD) Prefix | APX EVEX2 (NDD) Prefix |
|---|---|---|
| OP R/M, Reg | OP R/M, Reg | V = OP R/M, Reg |
| OP Reg, R/M | OP Reg, R/M | V = OP Reg, R/M |
| OP R/M, Imm | OP R/M, Imm | V = OP R/M, Imm |
| OP R/M | OP R/M | V = OP R/M |

### Graphics Execution Units

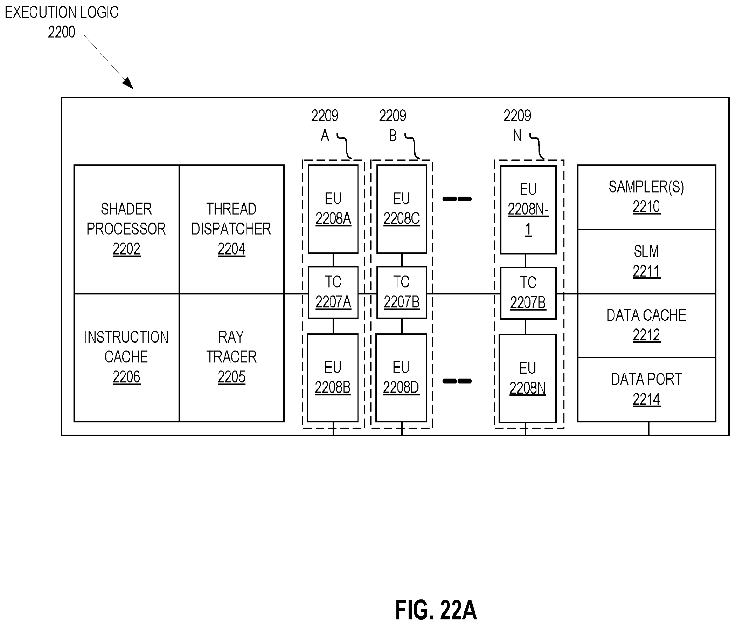

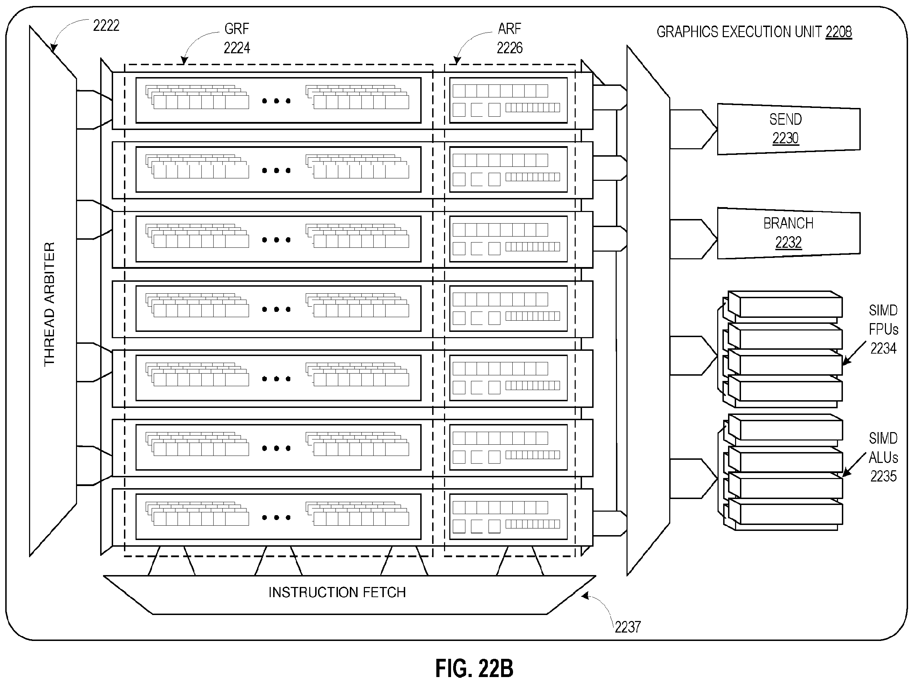

FIGS. 22A-22B illustrate thread execution logic 2200 including an array of processing elements employed in a graphics processor core according to examples described herein. Elements of FIGS. 22A-22B having the same reference numbers (or names) as the elements of any other figure herein can operate or function in any manner similar to that described elsewhere herein, but are not limited to such. FIG. 22A is representative of an execution unit within a general-purpose graphics processor, while FIG. 22B is representative of an execution unit that may be used within a compute accelerator.

As illustrated in FIG. 22A, in some examples thread execution logic 2200 includes a shader processor 2202, a thread dispatcher 2204, instruction cache 2206, a scalable execution unit array including a plurality of execution units 2208A-2208N, a sampler 2210, shared local memory 2211, a data cache 2212, and a data port 2214. In some examples the scalable execution unit array can dynamically scale by enabling or disabling one or more execution units (e.g., any of execution units 2208A, 2208B, 2208C, 2208D, through 2208N-1 and 2208N) based on the computational requirements of a workload. In some examples the included components are interconnected via an interconnect fabric that links to each of the components. In some examples, thread execution logic 2200 includes one or more connections to memory, such as system memory or cache memory, through one or more of instruction cache 2206, data port 2214, sampler 2210, and execution units 2208A-2208N. In some examples, each execution unit (e.g. 2208A) is a stand-alone programmable general-purpose computational unit that is capable of executing multiple simultaneous hardware threads while processing multiple data elements in parallel for each thread. In various examples, the array of execution units 2208A-2208N is scalable to include any number individual execution units.

In some examples, the execution units 2208A-2208N are primarily used to execute shader programs. A shader processor 2202 can process the various shader programs and dispatch execution threads associated with the shader programs via a thread dispatcher 2204. In some examples the thread dispatcher includes logic to arbitrate thread initiation requests from the graphics and media pipelines and instantiate the requested threads on one or more execution unit in the execution units 2208A-2208N. For example, a geometry pipeline can dispatch vertex, tessellation, or geometry shaders to the thread execution logic for processing. In some examples, thread dispatcher 2204 can also process runtime thread spawning requests from the executing shader programs.

In some examples, the execution units 2208A-2208N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2208A-2208N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2208A-2208N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2208A-2208N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2208A-2208N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 2209A-2209N having thread control logic (2207A-2207N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2209A-2209N includes at least two execution units. For example, fused execution unit 2209A includes a first EU 2208A, second EU 2208B, and thread control logic 2207A that is common to the first EU 2208A and the second EU 2208B. The thread control logic 2207A controls threads executed on the fused graphics execution unit 2209A, allowing each EU within the fused execution units 2209A-2209N to execute using a common instruction pointer register.

One or more internal instruction caches (e.g., 2206) are included in the thread execution logic 2200 to cache thread instructions for the execution units. In some examples, one or more data caches (e.g., 2212) are included to cache thread data during thread execution. Threads executing on the thread execution logic 2200 can also store explicitly managed data in the shared local memory 2211. In some examples, a sampler 2210 is included to provide texture sampling for 3D operations and media sampling for media operations. In some examples, sampler 2210 includes specialized texture or media sampling functionality to process texture or media data during the sampling process before providing the sampled data to an execution unit.

During execution, the graphics and media pipelines send thread initiation requests to thread execution logic 2200 via thread spawning and dispatch logic. Once a group of geometric objects has been processed and rasterized into pixel data, pixel processor logic (e.g., pixel shader logic, fragment shader logic, etc.) within the shader processor 2202 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2202 then executes an application programming interface (API)-supplied pixel or fragment shader program. To execute the shader program, the shader processor 2202 dispatches threads to an execution unit (e.g., 2208A) via thread dispatcher 2204. In some examples, shader processor 2202 uses texture sampling logic in the sampler 2210 to access texture data in texture maps stored in memory. Arithmetic operations on the texture data and the input geometry data compute pixel color data for each geometric fragment, or discards one or more pixels from further processing.

In some examples, the data port 2214 provides a memory access mechanism for the thread execution logic 2200 to output processed data to memory for further processing on a graphics processor output pipeline. In some examples, the data port 2214 includes or couples to one or more cache memories (e.g., data cache 2212) to cache data for memory access via the data port.

In some examples, the execution logic 2200 can also include a ray tracer 2205 that can provide ray tracing acceleration functionality. The ray tracer 2205 can support a ray tracing instruction set that includes instructions/functions for ray generation.

FIG. 22B illustrates exemplary internal details of an execution unit 2208, according to examples. A graphics execution unit 2208 can include an instruction fetch unit 2237, a general register file array (GRF) 2224, an architectural register file array (ARF) 2226, a thread arbiter 2222, a send unit 2230, a branch unit 2232, a set of SIMD floating point units (FPUs) 2234, and in some examples a set of dedicated integer SIMD ALUs 2235. The GRF 2224 and ARF 2226 includes the set of general register files and architecture register files associated with each simultaneous hardware thread that may be active in the graphics execution unit 2208. In some examples, per thread architectural state is maintained in the ARF 2226, while data used during thread execution is stored in the GRF 2224. The execution state of each thread, including the instruction pointers for each thread, can be held in thread-specific registers in the ARF 2226.

In some examples the graphics execution unit 2208 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2208 is not limited to the number of hardware threads, and multiple logical threads can be assigned to each hardware thread.

In some examples, the graphics execution unit 2208 can co-issue multiple instructions, which may each be different instructions. The thread arbiter 2222 of the graphics execution unit thread 2208 can dispatch the instructions to one of the send unit 2230, branch unit 2232, or SIMD FPU(s) 2234 for execution. Each execution thread can access 128 general-purpose registers within the GRF 2224, where each register can store 32 bytes, accessible as a SIMD 8-element vector of 32-bit data elements. In some examples, each execution unit thread has access to 4 Kbytes within the GRF 2224, although examples are not so limited, and greater or fewer register resources may be provided in other examples. In some examples the graphics execution unit 2208 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2224 can store a total of 28 Kbytes. Where 16 threads may access 4Kbytes, the GRF 2224 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2230. In some examples, branch instructions are dispatched to a dedicated branch unit 2232 to facilitate SIMD divergence and eventual convergence.

In some examples the graphics execution unit 2208 includes one or more SIMD FPU(s) 2234 to perform floating-point operations. In some examples, the FPU(s) 2234 also support integer computation. In some examples the FPU(s) 2234 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2235 are also present, and may be specifically optimized to perform operations associated with machine learning computations.

In some examples, arrays of multiple instances of the graphics execution unit 2208 can be instantiated in a graphics sub-core grouping (e.g., a sub-slice). For scalability, product architects can choose the exact number of execution units per sub-core grouping. In some examples the execution unit 2208 can execute instructions across a plurality of execution channels. In a further example, each thread executed on the graphics execution unit 2208 is executed on a different channel.

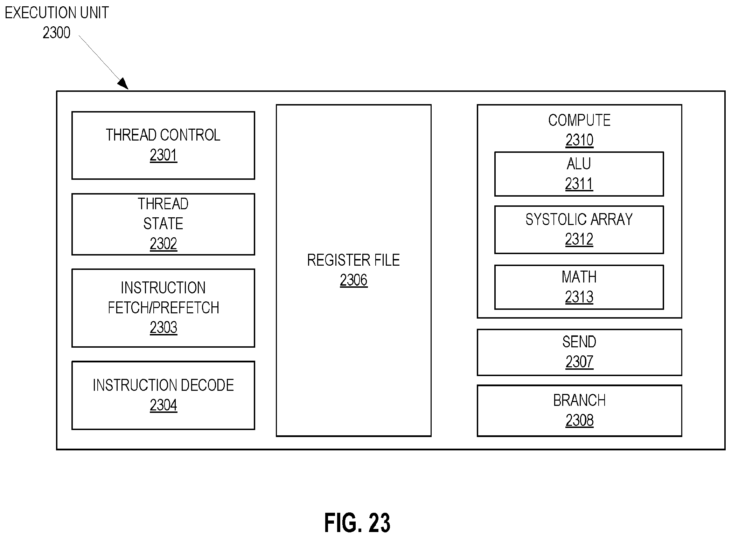

FIG. 23 illustrates an additional execution unit 2300, according to an example. In some examples, the execution unit 2300 includes a thread control unit 2301, a thread state unit 2302, an instruction fetch/prefetch unit 2303, and an instruction decode unit 2304. The execution unit 2300 additionally includes a register file 2306 that stores registers that can be assigned to hardware threads within the execution unit. The execution unit 2300 additionally includes a send unit 2307 and a branch unit 2308. In some examples, the send unit 2307 and branch unit 2308 can operate similarly as the send unit 2230 and a branch unit 2232 of the graphics execution unit 2208 of FIG. 22B.

The execution unit 2300 also includes a compute unit 2310 that includes multiple different types of functional units. In some examples the compute unit 2310 includes an ALU unit 2311 that includes an array of arithmetic logic units. The ALU unit 2311 can be configured to perform 64-bit, 32-bit, and 16-bit integer and floating point operations. Integer and floating point operations may be performed simultaneously. The compute unit 2310 can also include a systolic array 2312, and a math unit 2313. The systolic array 2312 includes a *W* wide and *D* deep network of data processing units that can be used to perform vector or other data-parallel operations in a systolic manner. In some examples the systolic array 2312 can be configured to perform matrix operations, such as matrix dot product operations. In some examples the systolic array 2312 support 16-bit floating point operations, as well as 8-bit and 4-bit integer operations. In some examples the systolic array 2312 can be configured to accelerate machine learning operations. In such examples, the systolic array 2312 can be configured with support for the bfloat 16-bit floating point format. In some examples, a math unit 2313 can be included to perform a specific subset of mathematical operations in an efficient and lower-power manner than the ALU unit 2311. The math unit 2313 can include a variant of math logic that may be found in shared function logic of a graphics processing engine provided by other examples. In some examples the math unit 2313 can be configured to perform 32-bit and 64-bit floating point operations.

The thread control unit 2301 includes logic to control the execution of threads within the execution unit. The thread control unit 2301 can include thread arbitration logic to start, stop, and preempt execution of threads within the execution unit 2300. The thread state unit 2302 can be used to store thread state for threads assigned to execute on the execution unit 2300. Storing the thread state within the execution unit 2300 enables the rapid pre-emption of threads when those threads become blocked or idle. The instruction fetch/prefetch unit 2303 can fetch instructions from an instruction cache of higher level execution logic (e.g., instruction cache 2206 as in FIG. 22A). The instruction fetch/prefetch unit 2303 can also issue prefetch requests for instructions to be loaded into the instruction cache based on an analysis of currently executing threads. The instruction decode unit 2304 can be used to decode instructions to be executed by the compute units. In some examples, the instruction decode unit 2304 can be used as a secondary decoder to decode complex instructions into constituent micro-operations.

The execution unit 2300 additionally includes a register file 2306 that can be used by hardware threads executing on the execution unit 2300. Registers in the register file 2306 can be divided across the logic used to execute multiple simultaneous threads within the compute unit 2310 of the execution unit 2300. The number of logical threads that may be executed by the execution unit 2300 is not limited to the number of hardware threads, and multiple logical threads can be assigned to each hardware thread. The size of the register file 2306 can vary across examples based on the number of supported hardware threads. In some examples, register renaming may be used to dynamically allocate registers to hardware threads.

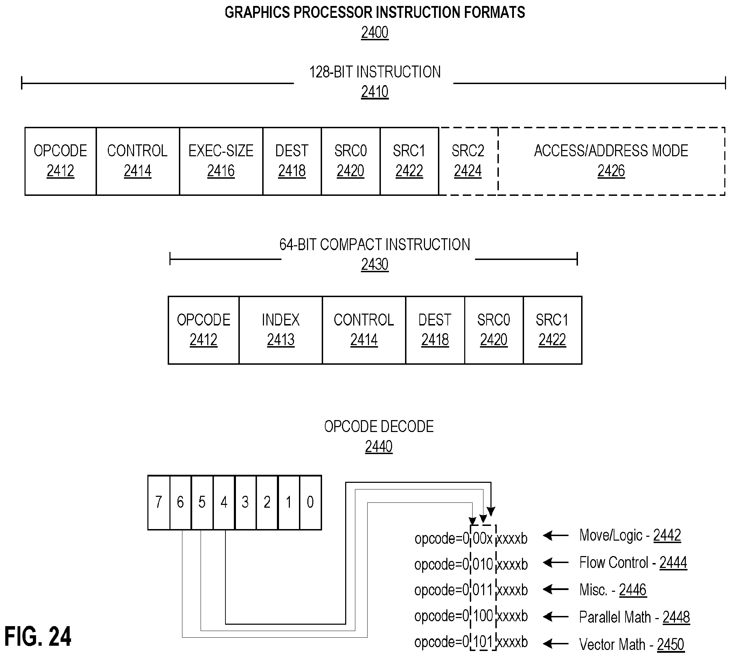

FIG. 24 is a block diagram illustrating a graphics processor instruction formats 2400 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2400 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2410. A 64-bit compacted instruction format 2430 is available for some instructions based on the selected instruction, instruction options, and number of operands. The native 128-bit instruction format 2410 provides access to all instruction options, while some options and operations are restricted in the 64-bit compacted format 2430. The native instructions available in the 64-bit compacted format 2430 vary by example. In some examples, the instruction is compacted in part using a set of index values in an index field 2413. The execution unit hardware references a set of compaction tables based on the index values and uses the compaction table outputs to reconstruct a native instruction in the 128-bit instruction format 2410. Other sizes and formats of instruction can be used.

For each format, instruction opcode 2412 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2414 enables control over certain execution options, such as channels selection (e.g., predication) and data channel order (e.g., swizzle). For instructions in the 128-bit instruction format 2410 an exec-size field 2416 limits the number of data channels that will be executed in parallel. In some examples, exec-size field 2416 is not available for use in the 64-bit compact instruction format 2430.

Some execution unit instructions have up to three operands including two source operands, src0 2420, src1 2422, and one destination 2418. In some examples, the execution units support dual destination instructions, where one of the destinations is implied. Data manipulation instructions can have a third source operand (e.g., SRC2 2424), where the instruction opcode 2412 determines the number of source operands. An instruction's last source operand can be an immediate (e.g., hard-coded) value passed with the instruction.

In some examples, the 128-bit instruction format 2410 includes an access/address mode field 2426 specifying, for example, whether direct register addressing mode or indirect register addressing mode is used. When direct register addressing mode is used, the register address of one or more operands is directly provided by bits in the instruction.

In some examples, the 128-bit instruction format 2410 includes an access/address mode field 2426, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2426 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2412 bit-fields to simplify Opcode decode 2440. For an 8-bit opcode, bits 4, 5, and 6 allow the execution unit to determine the type of opcode. The precise opcode grouping shown is merely an example. In some examples, a move and logic opcode group 2442 includes data movement and logic instructions (e.g., move (mov), compare (cmp)). In some examples, move and logic opcode group 2442 shares the five most significant bits (MSB), where move (mov) instructions are in the form of 0000xxxxb and logic instructions are in the form of 0001xxxxb. A flow control instruction group 2444 (e.g., call, jump (jmp)) includes instructions in the form of 0010xxxxb (e.g., 0x20). A miscellaneous instruction group 2446 includes a mix of instructions, including synchronization instructions (e.g., wait, send) in the form of 0011xxxxb (e.g., 0x30). A parallel math instruction group 2448 includes component-wise arithmetic instructions (e.g., add, multiply (mul)) in the form of 0100xxxxb (e.g., 0x40). The parallel math instruction group 2448 performs the arithmetic operations in parallel across data channels. The vector math group 2450 includes arithmetic instructions (e.g., dp4) in the form of 0101xxxxb (e.g., 0x50). The vector math group performs arithmetic such as dot product calculations on vector operands. The illustrated opcode decode 2440, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

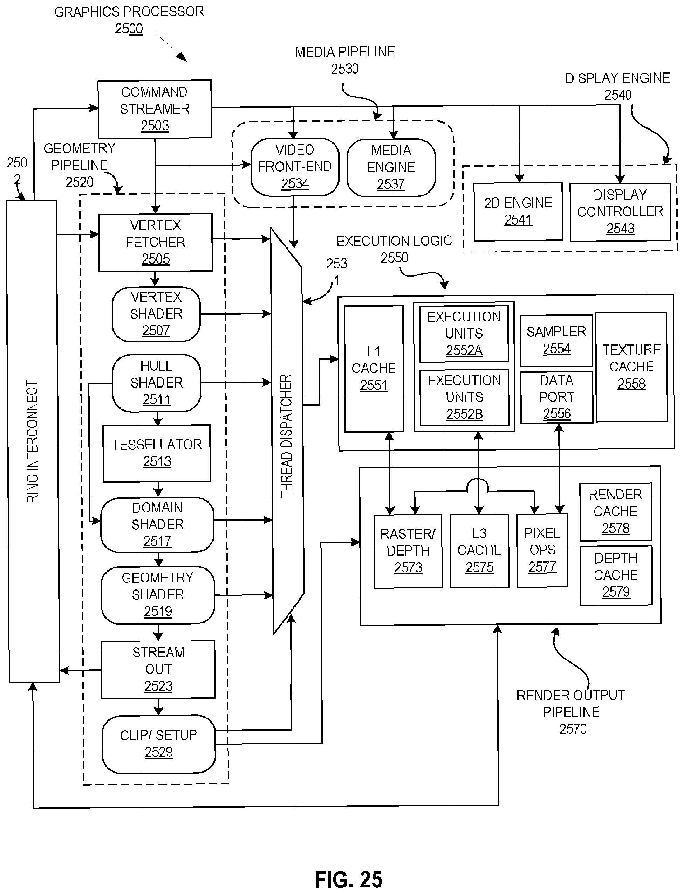

FIG. 25 is a block diagram of another example of a graphics processor 2500. Elements of FIG. 25 having the same reference numbers (or names) as the elements of any other figure herein can operate or function in any manner similar to that described elsewhere herein, but are not limited to such.

In some examples, graphics processor 2500 includes a geometry pipeline 2520, a media pipeline 2530, a display engine 2540, thread execution logic 2550, and a render output pipeline 2570. In some examples, graphics processor 2500 is a graphics processor within a multi-core processing system that includes one or more general-purpose processing cores. The graphics processor is controlled by register writes to one or more control registers (not shown) or via commands issued to graphics processor 2500 via a ring interconnect 2502. In some examples, ring interconnect 2502 couples graphics processor 2500 to other processing components, such as other graphics processors or general-purpose processors. Commands from ring interconnect 2502 are interpreted by a command streamer 2503, which supplies instructions to individual components of the geometry pipeline 2520 or the media pipeline 2530.

In some examples, command streamer 2503 directs the operation of a vertex fetcher 2505 that reads vertex data from memory and executes vertex-processing commands provided by command streamer 2503. In some examples, vertex fetcher 2505 provides vertex data to a vertex shader 2507, which performs coordinate space transformation and lighting operations to each vertex. In some examples, vertex fetcher 2505 and vertex shader 2507 execute vertex-processing instructions by dispatching execution threads to execution units 2552A-2552B via a thread dispatcher 2531.

In some examples, execution units 2552A-2552B are an array of vector processors having an instruction set for performing graphics and media operations. In some examples, execution units 2552A-2552B have an attached L1 cache 2551 that is specific for each array or shared between the arrays. The cache can be configured as a data cache, an instruction cache, or a single cache that is partitioned to contain data and instructions in different partitions.

In some examples, geometry pipeline 2520 includes tessellation components to perform hardware-accelerated tessellation of 3D objects. In some examples, a programmable hull shader 2511 configures the tessellation operations. A programmable domain shader 2517 provides back-end evaluation of tessellation output. A tessellator 2513 operates at the direction of hull shader 2511 and contains special purpose logic to generate a set of detailed geometric objects based on a coarse geometric model that is provided as input to geometry pipeline 2520. In some examples, if tessellation is not used, tessellation components (e.g., hull shader 2511, tessellator 2513, and domain shader 2517) can be bypassed.

In some examples, complete geometric objects can be processed by a geometry shader 2519 via one or more threads dispatched to execution units 2552A-2552B, or can proceed directly to the clipper 2529. In some examples, the geometry shader operates on entire geometric objects, rather than vertices or patches of vertices as in previous stages of the graphics pipeline. If the tessellation is disabled the geometry shader 2519 receives input from the vertex shader 2507. In some examples, geometry shader 2519 is programmable by a geometry shader program to perform geometry tessellation if the tessellation units are disabled.

Before rasterization, a clipper 2529 processes vertex data. The clipper 2529 may be a fixed function clipper or a programmable clipper having clipping and geometry shader functions. In some examples, a rasterizer and depth test component 2573 in the render output pipeline 2570 dispatches pixel shaders to convert the geometric objects into per pixel representations. In some examples, pixel shader logic is included in thread execution logic 2550. In some examples, an application can bypass the rasterizer and depth test component 2573 and access un-rasterized vertex data via a stream out unit 2523.

The graphics processor 2500 has an interconnect bus, interconnect fabric, or some other interconnect mechanism that allows data and message passing amongst the major components of the processor. In some examples, execution units 2552A-2552B and associated logic units (e.g., L1 cache 2551, sampler 2554, texture cache 2558, etc.) interconnect via a data port 2556 to perform memory access and communicate with render output pipeline components of the processor. In some examples, sampler 2554, caches 2551, 2558 and execution units 2552A-2552B each have separate memory access paths. In some examples the texture cache 2558 can also be configured as a sampler cache.

In some examples, render output pipeline 2570 contains a rasterizer and depth test component 2573 that converts vertex-based objects into an associated pixel-based representation. In some examples, the rasterizer logic includes a windower/masker unit to perform fixed function triangle and line rasterization. An associated render cache 2578 and depth cache 2579 are also available in some examples. A pixel operations component 2577 performs pixel-based operations on the data, though in some instances, pixel operations associated with 2D operations (e.g. bit block image transfers with blending) are performed by the 2D engine 2541, or substituted at display time by the display controller 2543 using overlay display planes. In some examples, a shared L3 cache 2575 is available to all graphics components, allowing the sharing of data without the use of main system memory.

In some examples, media pipeline 2530 includes a media engine 2537 and a video front-end 2534. In some examples, video front-end 2534 receives pipeline commands from the command streamer 2503. In some examples, media pipeline 2530 includes a separate command streamer. In some examples, video front-end 2534 processes media commands before sending the command to the media engine 2537. In some examples, media engine 2537 includes thread spawning functionality to spawn threads for dispatch to thread execution logic 2550 via thread dispatcher 2531.

In some examples, graphics processor 2500 includes a display engine 2540. In some examples, display engine 2540 is external to graphics processor 2500 and couples with the graphics processor via the ring interconnect 2502, or some other interconnect bus or fabric. In some examples, display engine 2540 includes a 2D engine 2541 and a display controller 2543. In some examples, display engine 2540 contains special purpose logic capable of operating independently of the 3D pipeline. In some examples, display controller 2543 couples with a display device (not shown), which may be a system integrated display device, as in a laptop computer, or an external display device attached via a display device connector.

In some examples, the geometry pipeline 2520 and media pipeline 2530 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

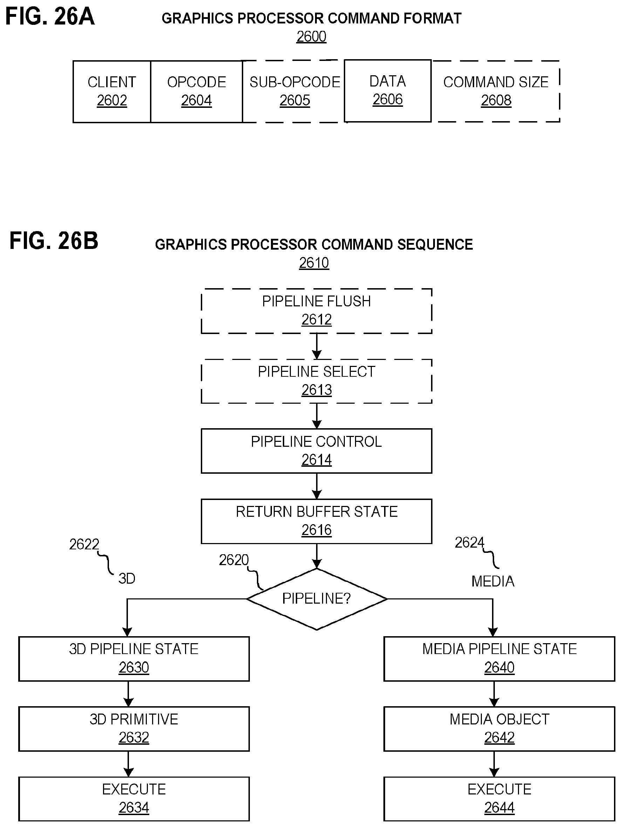

FIG. 26A is a block diagram illustrating a graphics processor command format 2600 according to some examples. FIG. 26B is a block diagram illustrating a graphics processor command sequence 2610 according to an example. The solid lined boxes in FIG. 26A illustrate the components that are generally included in a graphics command while the dashed lines include components that are optional or that are only included in a sub-set of the graphics commands. The graphics processor command format 2600 of FIG. 26A includes data fields to identify a client 2602, a command operation code (opcode) 2604, and data 2606 for the command. A sub-opcode 2605 and a command size 2608 are also included in some commands.

In some examples, client 2602 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 2604 and, if present, sub-opcode 2605 to determine the operation to perform. The client unit performs the command using information in data field 2606. For some commands an explicit command size 2608 is expected to specify the size of the command. In some examples, the command parser automatically determines the size of at least some of the commands based on the command opcode. In some examples commands are aligned via multiples of a double word. Other command formats can be used.

The flow diagram in FIG. 26B illustrates a graphics processor command sequence 2610. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 2610 may begin with a pipeline flush command 2612 to cause any active graphics pipeline to complete the currently pending commands for the pipeline. In some examples, the 3D pipeline 2622 and the media pipeline 2624 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 2612 can be used for pipeline synchronization or before placing the graphics processor into a low power state.

In some examples, a pipeline select command 2613 is used when a command sequence requires the graphics processor to explicitly switch between pipelines. In some examples, a pipeline select command 2613 is required only once within an execution context before issuing pipeline commands unless the context is to issue commands for both pipelines. In some examples, a pipeline flush command 2612 is required immediately before a pipeline switch via the pipeline select command 2613.

In some examples, a pipeline control command 2614 configures a graphics pipeline for operation and is used to program the 3D pipeline 2622 and the media pipeline 2624. In some examples, pipeline control command 2614 configures the pipeline state for the active pipeline. In some examples, the pipeline control command 2614 is used for pipeline synchronization and to clear data from one or more cache memories within the active pipeline before processing a batch of commands.

In some examples, return buffer state commands 2616 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 2620, the command sequence is tailored to the 3D pipeline 2622 beginning with the 3D pipeline state 2630 or the media pipeline 2624 beginning at the media pipeline state 2640.

The commands to configure the 3D pipeline state 2630 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 2630 commands are also able to selectively disable or bypass certain pipeline elements if those elements will not be used.

In some examples, 3D primitive 2632 command is used to submit 3D primitives to be processed by the 3D pipeline. Commands and associated parameters that are passed to the graphics processor via the 3D primitive 2632 command are forwarded to the vertex fetch function in the graphics pipeline. The vertex fetch function uses the 3D primitive 2632 command data to generate vertex data structures. The vertex data structures are stored in one or more return buffers. In some examples, 3D primitive 2632 command is used to perform vertex operations on 3D primitives via vertex shaders. To process vertex shaders, 3D pipeline 2622 dispatches shader execution threads to graphics processor execution units.

In some examples, 3D pipeline 2622 is triggered via an execute 2634 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 2610 follows the media pipeline 2624 path when performing media operations. In general, the specific use and manner of programming for the media pipeline 2624 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 2624 is configured in a similar manner as the 3D pipeline 2622. A set of commands to configure the media pipeline state 2640 are dispatched or placed into a command queue before the media object commands 2642. In some examples, commands for the media pipeline state 2640 include data to configure the media pipeline elements that will be used to process the media objects. This includes data to configure the video decode and video encode logic within the media pipeline, such as encode or decode format. In some examples, commands for the media pipeline state 2640 also support the use of one or more pointers to "indirect" state elements that contain a batch of state settings.

In some examples, media object commands 2642 supply pointers to media objects for processing by the media pipeline. The media objects include memory buffers containing video data to be processed. In some examples, all media pipeline states must be valid before issuing a media object command 2642. Once the pipeline state is configured and media object commands 2642 are queued, the media pipeline 2624 is triggered via an execute command 2644 or an equivalent execute event (e.g., register write). Output from media pipeline 2624 may then be post processed by operations provided by the 3D pipeline 2622 or the media pipeline 2624. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

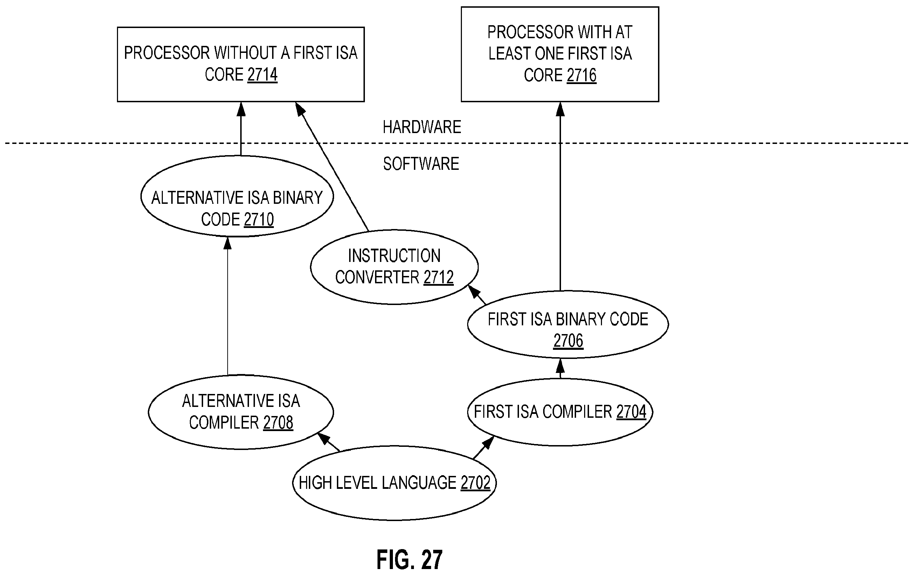

FIG. 27 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 27 shows a program in a high-level language 2702 may be compiled using a first ISA compiler 2704 to generate first ISA binary code 2706 that may be natively executed by a processor with at least one first ISA core 2716. The processor with at least one first ISA core 2716 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2704 represents a compiler that is operable to generate first ISA binary code 2706 (e.g., object code) that can, with or without additional linkage processing, be executed on the processor with at least one first ISA core 2716. Similarly, FIG. 27 shows the program in the high-level language 2702 may be compiled using an alternative ISA compiler 2708 to generate alternative ISA binary code 2710 that may be natively executed by a processor without a first ISA core 2714. The instruction converter 2712 is used to convert the first ISA binary code 2706 into code that may be natively executed by the processor without a first ISA core 2714. This converted code is not necessarily to be the same as the alternative ISA binary code 2710; however, the converted code will accomplish the general operation and be made up of instructions from the alternative ISA. Thus, the instruction converter 2712 represents software, firmware, hardware, or a combination thereof that, through emulation, simulation or any other process, allows a processor or other electronic device that does not have a first ISA processor or core to execute the first ISA binary code 2706.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

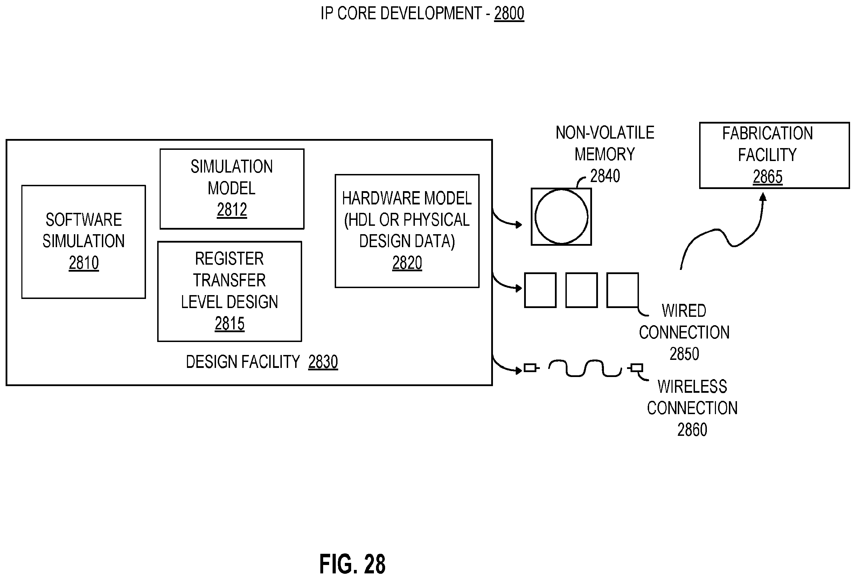

FIG. 28 is a block diagram illustrating an IP core development system 2800 that may be used to manufacture an integrated circuit to perform operations according to some examples. The IP core development system 2800 may be used to generate modular, reusable designs that can be incorporated into a larger design or used to construct an entire integrated circuit (e.g., an SOC integrated circuit). A design facility 2830 can generate a software simulation 2810 of an IP core design in a high-level programming language (e.g., C/C++). The software simulation 2810 can be used to design, test, and verify the behavior of the IP core using a simulation model 2812. The simulation model 2812 may include functional, behavioral, and/or timing simulations. A register transfer level (RTL) design 2815 can then be created or synthesized from the simulation model 2812. The RTL design 2815 is an abstraction of the behavior of the integrated circuit that models the flow of digital signals between hardware registers, including the associated logic performed using the modeled digital signals. In addition to an RTL design 2815, lower-level designs at the logic level or transistor level may also be created, designed, or synthesized. Thus, the particular details of the initial design and simulation may vary.

The RTL design 2815 or equivalent may be further synthesized by the design facility into a hardware model 2820, which may be in a hardware description language (HDL), or some other representation of physical design data. The HDL may be further simulated or tested to verify the IP core design. The IP core design can be stored for delivery to a fabrication facility 2865 using non-volatile memory 2840 (e.g., hard disk, flash memory, or any non-volatile storage medium). Alternatively, the IP core design may be transmitted (e.g., via the Internet) over a wired connection 2850 or wireless connection 2860. The fabrication facility 2865 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   execution resources to execute one or more instructions, the one or more instruction to include one or more of a store instruction and a load instruction; and
   masking and access control circuitry to provide at least per-domain masking and access control compression of cache lines to be stored to memory in response to a store instruction and decompression of cache lines loaded from memory for compressible cache lines.
2. The apparatus of example 1, wherein a cache line is to be compressed by encoding a pair of matching values in the cache line and storing the encoded pair as a value in the cache line.
3. The apparatus of example 2, wherein the encoding is to encode a location of a first value of the pair of matching values and an offset to a second value of the pair of matching values.
4. The apparatus of example 2, wherein the encoding is according to a domain.
5. The apparatus of example 2, wherein a cache line is compressible when data of the cache line is not random.
6. The apparatus of any of examples 1-5, wherein a cache line is not compressible when data of the cache line is random.
7. The apparatus of example 6, wherein a cache line is to be masked when the data of the cache line is random.
8. The apparatus of example 6, wherein a cache line is to be replaced with a conflict indicator value when the data of the cache line is not random.
9. The apparatus of any of examples 1-8, further comprising:
   encryption circuitry to encrypt compressed cache lines prior to storage in memory.
10. A system comprising:
   memory to store data;
   execution resources to execute one or more instructions, the one or more instruction to include one or more of a store instruction and a load instruction; and
   masking and access control circuitry to provide at least per-domain masking and access control compression of cache lines to be stored to memory in response to a store instruction and decompression of cache lines loaded from memory for compressible cache lines.
11. The system of example 10, further comprising:
   encryption circuitry to encrypt compressed cache lines prior to storage in memory.
12. The system of example 11, wherein a cache line is to be compressed by encoding a pair of matching values in the cache line and storing the encoded pair as a value in the cache line.
13. The system of example 12, wherein the encoding is to encode a location of a first value of the pair of matching values and an offset to a second value of the pair of matching values.
14. The system of example 12, wherein the encoding is according to a domain.
15. The system of example 12, wherein a cache line is compressible when data of the cache line is not random.
16. The system of any of examples 11-15, wherein a cache line is not compressible when data of the cache line is random.
17. The system of example 16, wherein a cache line is to be masked when the data of the cache line is random.
18. The system of example 16, wherein a cache line is to be replaced with a conflict indicator value when the data of the cache line is not random.
19. A non-transitory machine readable medium having one or more instructions stored thereon to cause a method to performed by computer hardware, the method comprising:
   in response to a store instruction,
   determining that data to be stored is not random,
   encoding the data to compress the data, and
   storing the data to a location indicated by the store instruction.
20. The non-transitory machine readable medium of example 19, wherein the method further comprises:
   in response to a load instruction,
   determining that data to be loaded is not random,
   decoding the data to decompress the data, and
   forwarding the data to a location indicated by the load instruction.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
execution resources means to execute one or more instructions, the one or more instruction to include one or more of a store instruction and a load instruction; and
masking and access control means to provide at least per-domain masking, and access control compression, of cache lines to be stored to memory in response to a store instruction and decompression of cache lines loaded from memory for compressible cache lines, wherein a cache line is to be compressed by encoding a pair of matching values in the cache line and storing the encoded pair as a value in the cache line.

2. The apparatus of claim 1, wherein the encoding is to encode a location of a first value of the pair of matching values and an offset to a second value of the pair of matching values.

3. The apparatus of any of claims 1-2, wherein the encoding is according to a domain.

4. The apparatus of any of claims 1-3, wherein a cache line is compressible when data of the cache line is not random.

5. The apparatus of any of claims 1-4, wherein a cache line is not compressible when data of the cache line is random.

6. The apparatus of claim 5, wherein a cache line is to be masked when the data of the cache line is random.

7. The apparatus of claim 5, wherein the masking is to randomize the data to distinguish when a line is encoded.

8. The apparatus of claim 5, wherein a cache line is to be replaced with a conflict indicator value when the data of the cache line is not random.

9. The apparatus of any of claims 1-8, further comprising:
encryption circuitry to encrypt compressed cache lines prior to storage in memory.

10. The apparatus of claim 1, further comprising:
memory to store data.

11. A method comprising:
in response to a store instruction,
determining that data to be stored is not random,
encoding the data to compress the data, and
storing the data to a location indicated by the store instruction.

12. The method of claim 11, wherein the method further comprises:
in response to a load instruction,
determining that data to be loaded is not random,
decoding the data to decompress the data, and
forwarding the data to a location indicated by the load instruction.

13. A computer program comprising instructions which, when the program is executed by a computer, cause the computer to carry out the method as claimed in any preceding claim.
